(19) Europäisches Patentamt
European Patent Office
Office européen des brevets

(11) EP 4 718 290 A2

(12) EUROPEAN PATENT APPLICATION

(43) Date of publication:
01.04.2026 Bulletin 2026/14

(51) International Patent Classification (IPC):
G06F 17/18 (2006.01)    G06F 30/00 (2020.01)
G06N 3/00 (2023.01)

(21) Application number: 25203169.5

(22) Date of filing: 18.09.2025

(52) Cooperative Patent Classification (CPC):
G06F 17/18; G06F 30/00; G06N 3/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.09.2024  US 202463698575 P
08.05.2025  US 202519201971

(71) Applicant: Lingnan University
Tuen Mun, New Territories (HK)

(72) Inventors:
• Qin, Si-Zhao J.
  Tuen Mun, New Territories (HK)
• Chen, Shumei
  Tuen Mun, New Territories (HK)

(74) Representative: Doherty, William et al
Albright IP Limited
County House
Bayshill Road
Cheltenham, Glos. GL50 3BA (GB)

(54) **SYSTEMS, METHODS AND COMPUTER-READABLE MEDIA FOR DYNAMIC PROCESS MONITORING AND/OR GENERATING A PRINCIPAL PREDICTOR MODEL**

(57)    A method for generating a principal predictor model from multi-dimensional time series data, comprises: receiving, from a plurality of sensors, multi-dimensional time series data corresponding to a plurality of original variables; transforming the multi-dimensional time series data to a lower dimension to define reduced-dimensional time series data; extracting, by a controller, a plurality of latent variables from the reduced-dimensional time series data and determining values of the plurality of latent variables in a first time period; initializing, by the controller, a loadings matrix corresponding to a set of latent variables of the plurality of latent variables; and determining, by the controller, one or more principal predictor model parameters, by performing an iterative process. The iterative process comprises (a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables; (c) updating the loadings matrix based on the calculated new loadings matrix; and (d) iteratively repeating (a) to (c) until the one or more principal predictor model parameters reach convergence.

Fig. 1

## Description

This application claims benefit under Article 87 EPC from US Provisional Patent Application No. 63/698,575, filed on 25 September 2024, and from US Non-provisional Patent Application No. 19/201,971, filed on 8 May 2025, which are hereby incorporated by reference herein in their entirety.

## Technical Field

Embodiments generally relate to systems, methods, and computer-readable media for dynamic process monitoring and fault detection in high-dimensional time series data, and in some embodiments for generating principal predictor models from multi-dimensional time series data.

## Background

Applications of industrial internet of things for intelligent and autonomous operations have led to abundant multi-dimensional time series data that provides tremendous opportunities for data analytics and information extraction. One such opportunity is to use the massive data for monitoring, prediction, and decision making. On the other hand, existing industrial processes already collect massive high dimensional operation data that can be utilized for multivariable monitoring and/or fault detection. Opportunities in data-driven monitoring applications include all electrical, mechanical, and civil engineering systems that require preventive maintenance. Examples include i) safety monitoring in municipal infrastructure, transportation systems, and utility plants, ii) building heating and cooling systems, and iii) industrial manufacturing processes that record multivariate time series data for quality and safety monitoring.

A multivariate time data series is a series of two or more variables which vary over time. Two common characteristics of such multivariate time data series are, i) collinearity across the high dimension which yields a subspace of cross-correlated variations and ii) serial dependence over time that appears as auto-correlation, which makes the subsequent samples predictable from the preceding ones. Most existing data analysis methods deal with the collinearity issue for process monitoring, but serial dependence in data has not been well studied except in model-based fault detection systems. In recent years, the joint problem of data collinearity and dynamics has been systematically treated as a latent and reduced-dimensional dynamic modeling framework. Treated as univariate latent dynamics, dynamic inner principal component analysis (DiPCA) and dynamic inner canonical correlation analysis (DiCCA) methods have been developed with univariate latent autoregressive (AR) models. A latent variable (also referred to as a 'hidden variable') is a variable which is not directly observed or not one of the observed variables, but rather is inferred from one or more of the observed variables. A latent variable represents underlying characteristics, factors, or constructs that are not directly measurable but can be estimated through their relationships with observed data. An autoregressive model is a model that predicts future values based on at least past values. A univariate latent autoregressive model is an autoregressive model that is based on a single latent variable (rather than a plurality of latent variables). DiPCA and DiCCA methods extract one dynamic latent variable (DLV) at a time to make it most predictable from its past data. As a result, each of the DLVs is modeled as a univariate autoregressive (AR) process. These univariate AR models can be interpreted as marginal models, which are decoupled at the expense of increased variance in the model errors. An apparent drawback of these non-interacting AR models is that they can be inefficient in extracting the DLV dynamics when the true latent structure is interacting. The inefficiency often leads to the use of very high order AR models and an excessive number of DLVs. Iterative algorithms have been developed to address such issues, which employs a vector AR model for all latent variables. However, such iterative algorithms are sequential with one DLV after another. When the algorithm iterates from the $(l-1)^{th}$ DLV to the $l^{th}$ DLV, the weight matrix of the prior $(l-1)$ DLVs is not updated, which is sub-optimal.

To include interactive latent dynamic relations, attempts have been made to use vector AR latent dynamic models, and/or cast the vector AR latent model in a probabilistic framework for parameter estimation. However, such works use a canonical correlation as the objective function, which ignores the variance magnitude of the extracted dynamic latent variables.

Overall, while significant progress has been made in dynamic latent variable modeling and monitoring, challenges remain in efficiently capturing and predicting variances in high-dimensional time series data.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

## Summary

Some embodiments relate to a method for generating a principal predictor model from multi-dimensional time series data, comprising: receiving, from a plurality of sensors, multi-dimensional time series data corresponding to a plurality of original variables; transforming the multi-dimensional time series data to a lower dimension to define reduced-dimensional time series data; extracting, by a controller, a plurality of latent variables from the reduced-dimensional time series data and determining values of the plurality of latent variables in a first time period; initializing, by the controller, a loadings matrix corresponding to a set of latent variables of the plurality of latent variables; determining, by the controller, one or more principal predictor model parameters, by performing an iterative process which comprises: (a) predicting values of the plurality of latent variables based on the reduced-dimensional time-series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables; (c) updating the loadings matrix based on the calculated new loadings matrix; and (d) iteratively repeating (a) to (c) until the one or more principal predictor model parameters reach convergence.

In some embodiments, transforming the multi-dimensional time series data to a lower dimension may comprise performing singular value decomposition (SVD) on the multi-dimensional time-series data.

The method may further comprise generating a latent vector autoregressive (LaVAR) model based on the determined one or more principal predictor model parameters. The principal predictor model may comprise a maximum predicted variance (MPV) objective.

In some embodiments, the estimation process may simultaneously maximize a covariance of the predicted values of the plurality of latent variables. The estimation process may simultaneously maximize a covariance of predicted variability in the predicted values of the plurality of latent variables.

Calculating a new loadings matrix may comprise performing an eigen-decomposition on a matrix of the predicted values of the plurality of latent variables to calculate the new loadings matrix.

In some embodiments, the method may further comprise determining the number of latent variables in the set of latent variables. Determining the number of latent variables may capture a target amount of predictable variations in the reduced-dimensional time series data by the latent variables. Determining the number of latent variables may be based on a target proportion of predicted variance (PPV). The number of latent variables may be determined such that the target PPV accounts for a majority of the total predicted variance. The number of latent variables may be determined such that the target PPV accounts for at least 95% of the total predicted variance.

The method may further comprise determining an orthogonal complement of the loadings matrix to define a static loadings matrix.

In some embodiments, the method may further comprise analyzing the multi-dimensional time series data corresponding to a dynamic system using the principal predictor model; generating one or more monitoring indices for prediction residuals and/or latent variables of the analyzed multi-dimensional time series data; and detecting an abnormality in the multi-dimensional time series data based on the one or more monitoring indices.

Generating one or more monitoring indices may comprise a) generating one or more first monitoring indices for the prediction residuals; b) generating one or more second monitoring indices for the latent variables; and c) generating one or more combined monitoring indices based on the one or more first monitoring indices for the prediction residuals and the one or more second monitoring indices for the latent variables.

The one or more first monitoring indices for the prediction residuals may comprise at least one of a first Hotelling's index defined for the prediction residuals and a square prediction error (SPE) index. The one or more first monitoring indices for the prediction residuals may comprise a combination of the first Hotelling's index and the SPE index. The one or more second monitoring indices for the latent variables may comprise a second Hotelling's index defined for the predicted latent variables.

In some embodiments, the method may further comprise generating one or more overall monitoring indices for both the prediction residuals and the predicted latent variables by: determining a first Hotelling's index for the prediction residuals; determining a squared prediction error (SPE) index for the prediction residuals; combining the first Hotelling's index for the prediction residuals and the SPE index for the prediction residuals to generate one or more combined monitoring indices for the prediction residuals; determining a second Hotelling's index for the predicted latent variables; and combining the second Hotelling's index for the predicted latent variables with the one or more combined monitoring indices for the prediction residuals.

Some embodiments relate to a method for identifying a detected abnormality in multi-dimensional time series data using a principal predictor model generated by the methods disclosed herein, comprising: determining a prediction error matrix based on differences between the predicted values of the multi-dimensional time series data and the actual values of the multi-dimensional time series data; decomposing the prediction error matrix to identify abnormality directions in the prediction error matrix; determining a reconstruction-based contributions (RBC) matrix comprising the contributions of each variable to the detected abnormality; and analyzing the RBC matrix to identify the detected abnormality.

In some embodiments, the abnormality directions may be used to reconstruct abnormality-free data. In some embodiments, reconstructing the abnormality-free data may comprise projecting the predicted error matrix onto the abnormality directions and subtracting the contributions of the detected abnormality from the multi-dimensional time series data.

Some embodiments relate to a non-transitory computer-readable storage medium storing instructions which, when executed by a processing device, cause the processing device to perform any of the methods disclosed herein.

Some embodiments relate to a computing device comprising the non-transient computer-readable storage medium disclosed herein and a processor configured to execute instructions stored in the non-transient computer-readable storage medium.

Some embodiments relate to a system for generating principal predictor models from multi-dimensional time series data, comprising: a plurality of sensors, configured to detect multi-dimensional time series data corresponding to a plurality of original variables; and a processing unit coupled to the plurality of sensors, the processing unit configured to execute any of the methods disclosed herein.

Some embodiments provide a system for generating principal predictor models from multi-dimensional time series data, comprising: a plurality of sensors, configured to detect multi-dimensional time series data corresponding to a plurality of original variables; and a processing unit coupled to the plurality of sensors, the processing unit configured to: transform the multi-dimensional time series data to a lower dimension to define reduced-dimensional time series data; extract, by a controller, a plurality of latent variables from the reduced-dimensional time series data and determining values of the plurality of latent variables in a first time period; initialize, by the controller, a loadings matrix corresponding to a set of latent variables of the plurality of latent variables; determine, by the controller, one or more principal predictor model parameters, by performing an iterative process which comprises: (a) predicting values of the plurality of latent variables based on the reduced-dimensional time-series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables, and (c) updating the loadings matrix based on the calculated new loadings matrix; and (d) iteratively repeating (a) to (c) until the one or more principal predictor model parameters reach convergence.

Some embodiments provide a non-transitory computer-readable medium storing instructions which, when executed by one or more processors, cause the one or more processors to: receive, from a plurality of sensors, multi-dimensional time series data corresponding to a plurality of original variables; transform the multi-dimensional time series data to a lower dimension to define reduced-dimensional time series data; extract a plurality of latent variables from the reduced-dimensional time series data and determine values of the plurality of latent variables in a first time period; initialize a loadings matrix corresponding to a set of latent variables of the plurality of latent variables; determine one or more principal predictor model parameters by performing an iterative process which comprises: (a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables, and (c) updating the loadings matrix based on the calculated new loadings matrix; and (d) iteratively repeating (a) to (c) until the one or more principal predictor model parameters reach convergence.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

## Brief Description of Drawings

Various ones of the appended drawings merely illustrate example embodiments of the present disclosure and cannot be considered as limiting its scope.

Figure 1 is a process flow diagram of a method for generating a principal predictor model from multi-dimensional time series data, according to some embodiments;

Figure 2A is a process flow diagram of a method for detecting an abnormality in a dynamic system, according to some embodiments;

Figure 2B is a process flow diagram of a method for generating one or more monitoring indices, according to some embodiments;

Figure 3A is a process flow diagram of a method for generating one or more overall monitoring indices for the prediction residuals and the predicted latent variables, according to some embodiments;

Figure 3B is a process flow diagram of a PPA-based method for monitoring and detecting faults, according to some embodiments;

Figure 4 is a diagram of a dynamic system example with a process fault, according to some embodiments;

Figure 5A is a comparison of monitoring charts of $\phi_e$ and $\phi_o$ using DLVs compared to DiCCA and PCA based monitoring for the example system in Figure 4;

Figure 5B is another illustration of the comparison of monitoring charts of $\phi_e$ and $\phi_o$ using DLVs compared to DiCCA and PCA based monitoring for the example system in Figure 4;

Figure 6 is a table showing the studied 23 measured variables in 19 decentralized control loops, according to some embodiments;

**Figure** 7 is a graph showing the CPVs($\ell$) for LaVAR-MPV, LaVAR-CCA and DiCCA, according to some embodiments;

**Figure** 8A shows the fault detection rate (FDR) and false alarm rate (FAR) using monitoring indices $\phi_e$, $\phi_o$, $\varphi_{eDiCCA}$, $\phi_{oDiCCA}$, $Q_y$ and $\phi_y$ for a LaVAR-MPV model, according to some embodiments, as well as DiCCA and PCA;

**Figure** 8B shows another illustration of the fault detection rate (FDR) and false alarm rate (FAR) using monitoring indices $\phi_e$, $\phi_o$, $\phi_{eDiCCA}$, $\phi_{oDiCCA}$, $Q_{yPCA}$ and $\phi_{yPCA}$ for the PPA model, according to some embodiments, as well as DiCCA and PCA;

**Figure** 9A is a comparison of the monitoring charts of $\phi_e$ and $\phi_o$ using 8 DLVs with a LaVAR-MPV model, according to some embodiments, compared to DiCCA and PCA based monitoring for IDV2;

**Figure** 9B is another illustration of the comparison of the monitoring charts of $\phi_e$ and $\phi_o$ using 8 DLVs with the PPA model, according to some embodiments, compared to DiCCA and PCA based monitoring for IDV2;

**Figure 10** is a comparison of the monitoring charts of $\phi_e$ and $\phi_o$ using 8 DLVs with a LaVAR-MPV model, according to some embodiments, compared to DiCCA and PCA based monitoring for IDV11; and

**Figure** 11 is a comparison of monitoring charts $\phi_e$ and $\phi_o$ using 8 DLVs with a LaVAR-MPV model, according to some embodiments, compared to DiCCA and PCA based monitoring for IDV13;

**Figure 12** is a comparison of graphs showing the proportion of total variance (PTV
) (top graph) and the proportion of predicted variance (PPV) (bottom graph) for PPA, LaVAR and DiCCA models of the test dataset;

**Figure 13** is a graph showing the monitoring index $\phi_e$ for Disturbances 1 and 2 by the PPA model;

**Figure 14** is a graph showing the training data and test data till June 15 separated with a vertical dashed line;

**Figure 15** is a chart showing the contribution of each variable for Disturbances 1 and 2, respectively;

**Figure 16** is a graph showing the monitoring indexes $\phi_e^r$ and $\phi_e$ of Disturbances 1 and 2;

**Figure 17** is a set of graphs showing the original and PPA-generated values for the anomaly periods in the training and test datasets; and

**Figure 18** is a block diagram of a system configured to generate one or more principal predictor models, according to some embodiments.

**Description of Embodiments**

Numbered Embodiments - Set One

Embodiment 1.1. A method for generating a principal predictor model from multi-dimensional time series data, comprising: receiving, from a plurality of sensors, multi-dimensional time series data corresponding to a plurality of original variables; transforming the multi-dimensional time series data to a lower dimension to define reduced-dimensional time series data; extracting, by a controller, a plurality of latent variables from the reduced-dimensional time series data and determining values of the plurality of latent variables in a first time period; initializing, by the controller, a loadings matrix corresponding to a set of latent variables of the plurality of latent variables; determining, by the controller, one or more principal predictor model parameters, by performing an iterative process which comprises:

(a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables; (c) updating the loadings matrix based

on the calculated new loadings matrix; and (d) iteratively repeating (a) to (c) until the one or more principal predictor model parameters reach convergence.

Embodiment 1.2. The method according to Embodiment 1.1, wherein transforming the multi-dimensional time series data to a lower dimension comprises performing singular value decomposition (SVD) on the multi-dimensional time series data.

Embodiment 1.3. The method according to any one of Embodiments 1.1 to 1.2, further comprising generating a latent vector autoregressive (LaVAR) model based on the determined one or more principal predictor model parameters.

Embodiment 1.4. The method according to any one of Embodiments 1.1 to 1.3, wherein the principal predictor model comprises a maximum predicted variance (MPV) objective.

Embodiment 1.5. The method according to any one of Embodiments 1.1 to 1.4, wherein the estimation process simultaneously maximizes a covariance of the predicted values of the plurality of latent variables.

Embodiment 1.6. The method according to Embodiments 1.5, wherein the estimation process simultaneously maximizes a covariance of predicted variability in the predicted values of the plurality of latent variables.

Embodiment 1.7. The method according to any one of Embodiments 1.1 to 1.6, wherein calculating a new loadings matrix comprises performing an eigen-decomposition on a matrix of the predicted values of the plurality of latent variables to calculate the new loadings matrix.

Embodiment 1.8. The method according to any one of Embodiments 1.1 to 1.7, further comprising determining the number of latent variables in the set of latent variables.

Embodiment 1.9. The method according to Embodiment 1.8, wherein determining the number of latent variables captures a target amount of predictable variations in the reduced-dimensional time series data by the latent variables.

Embodiment 1.10. The method according to any one of Embodiments 1.8 to 1.9, wherein determining the number of latent variables is based on a target proportion of predicted variance (PPV).

Embodiment 1.11. The method according to Embodiment 1.10, wherein the number of latent variables is determined such that the target PPV accounts for a majority of the total predicted variance.

Embodiment 1.12. The method according to any one of Embodiments 1.10 to 1.11, wherein the number of latent variables is determined such that the target PPV accounts for at least 95% of the total predicted variance.

Embodiment 1.13. The method according to any one of Embodiments 1.1 to 1.12, further comprising determining an orthogonal complement of the loadings matrix to define a static loadings matrix.

Embodiment 1.14. A method for generating a principal predictor model from multi-dimensional time series data according to any one of Embodiments 1.1 to 1.13, further comprising: analyzing the multi-dimensional time series data corresponding to a dynamic system using the principal predictor model; generating one or more monitoring indices for prediction residuals and/or latent variables of the analyzed multi-dimensional time series data; and detecting an abnormality in the multi-dimensional time series data based on the one or more monitoring indices.

Embodiment 1.15. The method according to any one of Embodiments 1.1 to 1.14, wherein generating one or more monitoring indices, comprises: a) generating one or more first monitoring indices for the prediction residuals; b) generating one or more second monitoring indices for the latent variables; and c) generating one or more combined monitoring indices based on the one or more first monitoring indices for the prediction residuals and the one or more second monitoring indices for the latent variables.

Embodiment 1.16. The method according to Embodiment 1.15, wherein the one or more first monitoring indices for the prediction residuals comprises at least one of a first

Hotelling's index defined for the prediction residuals and a square prediction error (SPE) index.

Embodiment 1.17. The method according to any one of Embodiments 1.15 to 1.16, wherein the one or more first monitoring indices for the prediction residuals comprises a combination of the first Hotelling's index and the SPE index.

Embodiment 1.18. The method according to any one of Embodiments 1.15 to 1.17, wherein the one or more second monitoring indices for the latent variables comprises a second Hotelling's index defined for the predicted latent variables.

Embodiment 1.19. The method according to any one of Embodiments 1.1 to 1.18, wherein the method further comprises generating one or more overall monitoring indices for both the prediction residuals and the predicted latent variables by: determining a first Hotelling's index for the prediction residuals; determining a squared prediction error (SPE) index for the prediction residuals; combining the first Hotelling's index for the prediction residuals and the SPE index for the prediction residuals to generate one or more combined monitoring indices for the prediction residuals; determining a second Hotelling's index for the predicted latent variables; and combining the second Hotelling's index for the predicted latent variables with the one or more combined monitoring indices for the prediction residuals.

Embodiment 1.20. A system for generating principal predictor models from multi-dimensional time series data, comprising: a plurality of sensors, configured to detect multi-dimensional time series data corresponding to a plurality of original variables; and a processing unit coupled to the plurality of sensors, the processing unit configured to: transform the multi-dimensional time series data to a lower dimension to define reduced-dimensional time series data; extract, by a controller, a plurality of latent variables from the reduced-dimensional time series data and determine values of the plurality of latent variables in a first time period; initialize, by the controller, a loadings matrix corresponding to a set of latent variables of the plurality of latent variables; determine, by the controller, one or more principal predictor model parameters, by performing an iterative process which comprises:

(a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables, and (c) updating the loadings matrix based on the calculated new loadings matrix; and (d) iteratively repeating (a) to (c) until the one or more principal predictor model parameters reach convergence.

Embodiment 1.21. The system according to Embodiment 1.20, wherein extracting a plurality of latent variables from the multi-dimensional time series data transforming the multi-dimensional time series data to a lower dimension comprises performing singular value decomposition (SVD) on the multi-dimensional time series data.

Embodiment 1.22. The system according to any one of Embodiments 1.20 to 1.21, wherein the processing unit is further configured to generate a latent vector autoregressive (LaVAR) model based on the determined one or more principal predictor model parameters.

Embodiment 1.23. The system according to any one of Embodiments 1.20 to 1.22, wherein the principal predictor model comprises a maximum predicted variance (MPV) objective.

Embodiment 1.24. The system according to any one of Embodiments 1.20 to 1.23, wherein the estimation process simultaneously maximizes a covariance of the predicted values of the plurality of latent variables.

Embodiment 1.25. The system according to Embodiment 1.24, wherein the estimation process simultaneously maximizes a covariance of predicted variability in the predicted values of the plurality of latent variables.

Embodiment 1.26. The system according to any one of Embodiments 1.20 to 1.25, wherein calculating a new loadings matrix comprises performing an eigen-decomposition on a matrix of the predicted values of the plurality of latent variables to calculate the new loadings matrix.

Embodiment 1.27. The system according to any one of Embodiments 1.20 to 1.26, wherein the processing unit is further configured to determine the number of latent variables in the set of latent variables.

Embodiment 1.28. The system according to Embodiment 1.27, wherein determining the number of latent variables captures a target amount of predictable variations in the reduced-dimensional time series data by the latent variables.

Embodiment 1.29. The system according to any one of Embodiment 1.27 to 1.28, wherein determining the number of latent variables is based on a target proportion of predicted variance (PPV).

Embodiment 1.30. The system according to Embodiment 1.29, wherein the number of latent variables is determined such that the target PPV accounts for a majority of the total predicted variance.

Embodiment 1.31. The system according to any one of Embodiments 1.29 to 1.30, wherein the number of latent variables is determined such that the target PPV accounts for at least 95% of the total predicted variance.

Embodiment 1.32. The system according to any one of Embodiments 1.20 to 1.31, wherein the processing unit is further configured to determine an orthogonal complement of the loadings matrix to define a static loadings matrix.

Embodiment 1.33. The system according to any one of Embodiments 1.20 to 1.32, wherein the processing unit is further configured to: analyze the multi-dimensional time series data corresponding to a dynamic system using the principal predictor model; generate one or more monitoring indices for prediction residuals and/or latent variables of the analyzed multi-dimensional time series data; and detect an abnormality in the multi-dimensional time series data based on the one or more monitoring indices.

Embodiment 1.34. The system according to any one of Embodiments 1.20 to 1.33, wherein generating one or more monitoring indices, comprises: a) generating one or more first monitoring indices for the prediction residuals; b) generating one or more second monitoring indices for the latent variables; and c) generating one or more combined monitoring indices based on the one or more first monitoring indices for the prediction residuals and the one or more second monitoring indices for the latent variables.

Embodiment 1.35. The system according to Embodiment 1.34, wherein the one or more first monitoring indices for the prediction residuals comprises at least one of a first Hotelling's index defined for the prediction residuals and a square prediction error (SPE) index.

Embodiment 1.36. The system according to any one of Embodiments 1.34 to 1.35, wherein the one or more first monitoring indices for the prediction residuals comprises a combination of the first Hotelling's index and the SPE index.

Embodiment 1.37. The system according to any one of Embodiments 1.34 to 1.36, wherein the one or more second monitoring indices for the latent variables comprises a second Hotelling's index defined for the predicted latent variables.

Embodiment 1.38. The system according to any one of Embodiments 1.20 to 1.37, wherein the processing unit is further configured to generate one or more overall monitoring indices for both the prediction residuals and the predicted latent variables by: determining a first Hotelling's index for the prediction residuals; determining a squared prediction error (SPE) index for the prediction residuals; combining the first Hotelling's index for the prediction residuals and the SPE index for the prediction residuals to generate one or more combined monitoring indices for the prediction residuals; determining a second Hotelling's index for the predicted latent variables; and combining the second Hotelling's index for the predicted latent variables with the one or more combined monitoring indices for the prediction residuals.

Embodiment 1.39. A non-transitory computer-readable medium storing instructions which, when executed by one or more processors, cause the one or more processors to: receive, from a plurality of sensors, multi-dimensional time series data corresponding to a plurality of original variables; transform the multi-dimensional time series data to a lower dimension to define reduced-dimensional time series data; extract a plurality of latent variables from the reduced-dimensional time series data and determine values of the plurality of latent variables in a first time period; initialize a loadings matrix corresponding to a set of latent variables of the plurality of latent variables; determine one or more principal predictor model parameters by performing an iterative process which comprises: (a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables, and (c) updating the loadings matrix based on the calculated new loadings matrix; and (d) iteratively repeating (a) to (c) until the one or more principal predictor model parameters reach convergence.

Embodiment 1.40. The non-transitory computer-readable medium according to Embodiment 1.39, wherein transforming the multi-dimensional time series data to a lower dimension comprises performing singular value decomposition (SVD) on the multi-dimensional time series data.

Embodiment 1.41. The non-transitory computer-readable medium according to any one of Embodiments 1.39 to 1.40, wherein the one or more processors are caused to generate a latent vector autoregressive (LaVAR) model based on the determined one or more principal predictor model parameters.

Embodiment 1.42. The non-transitory computer-readable medium according to any one of Embodiments 1.39 to 1.41, wherein the principal predictor model comprises a maximum predicted variance (MPV) objective.

Embodiment 1.43. The non-transitory computer-readable medium according to any one of Embodiments 1.39 to 1.42, wherein the estimation process simultaneously maximizes a covariance of the predicted values of the plurality of latent variables.

Embodiment 1.44. The non-transitory computer-readable medium according to Embodiment 1.43, wherein the estimation process simultaneously maximizes a covariance of predicted variability in the predicted values of the plurality of latent variables.

Embodiment 1.45. The non-transitory computer-readable medium according to any one of Embodiments 1.39 to 1.44, wherein calculating a new loadings matrix comprises performing an eigen-decomposition on a matrix of the predicted values of the plurality of latent variables to calculate the new loadings matrix.

Embodiment 1.46. The non-transitory computer-readable medium according to any one of Embodiments 1.39 to 1.45, wherein the one or more processors are caused to determine the number of latent variables in the set of latent variables.

Embodiment 1.47. The non-transitory computer-readable medium according to Embodiment 1.46, wherein determining the number of latent variables captures a target amount of predictable variations in the reduced-dimensional time series data by the latent variables.

Embodiment 1.48. The non-transitory computer-readable medium according to any one of Embodiments 1.46 to 1.47, wherein determining the number of latent variables is based on a target proportion of predicted variance (PPV).

Embodiment 1.49. The non-transitory computer-readable medium according to Embodiment 1.48, wherein the number of latent variables is determined such that the target PPV accounts for a majority of the total predicted variance.

Embodiment 1.50. The non-transitory computer-readable medium according to any one of Embodiments 1.48 to 1.49, wherein the number of latent variables is determined such that the target PPV accounts for at least 95% of the total predicted variance.

Embodiment 1.51. The non-transitory computer-readable medium according to any one of Embodiments 1.39 to 1.50, wherein the one or more processors are caused to determine an orthogonal complement of the loadings matrix to define a static loadings matrix.

Embodiment 1.52. A non-transitory computer-readable medium according to any one of Embodiments 1.39 to 1.51, wherein the one or more processors are caused to: analyze the reduced-dimensional time series data corresponding to a dynamic system using the principal predictor model; generate one or more monitoring indices for prediction residuals and/or latent variables of the analyzed reduced-dimensional time series data; and detect an abnormality in the reduced-dimensional time series data based on the one or more monitoring indices.

Embodiment 1.53. The non-transitory computer-readable medium according to any one of Embodiments 1.39 to 1.52, wherein generating one or more monitoring indices, comprises: a) generating one or more first monitoring indices for the prediction residuals; b) generating one or more second monitoring indices for the latent variables; and c) generating one or more combined monitoring indices based on the one or more first monitoring indices for the prediction residuals and the one or more second monitoring indices for the latent variables.

Embodiment 1.54. The non-transitory computer-readable medium according to Embodiment 1.53, wherein the one or more first monitoring indices for the prediction residuals comprises at least one of a first Hotelling's index defined for the prediction residuals and a square prediction error (SPE) index.

Embodiment 1.55. The non-transitory computer-readable medium according to any one of Embodiments 1.53 to 1.54, wherein the one or more first monitoring indices for the prediction residuals comprises a combination of the first Hotelling's index and the SPE index.

Embodiment 1.56. The non-transitory computer-readable medium according to any one of Embodiments 1.53 to 1.55, wherein the one or more second monitoring indices for the latent variables comprises a second Hotelling's index defined for the predicted latent variables.

Embodiment 1.57. The non-transitory computer-readable medium according to any one of Embodiments 1.39 to 1.56, wherein the one or more processors are caused to generate one or more overall monitoring indices for both the prediction residuals and the predicted latent variables by: determining a first Hotelling's index for the prediction residuals; determining a squared prediction error (SPE) index for the prediction residuals; combining the first Hotelling's index for the prediction residuals and the SPE index for the prediction residuals to generate one or more combined monitoring indices for the prediction residuals; determining a second Hotelling's index for the predicted latent variables; and combining the

second Hotelling's index for the predicted latent variables with the one or more combined monitoring indices for the prediction residuals.

Numbered Embodiments - Set Two

Embodiment 2.1. A method for generating a principal predictor model from multi-dimensional time series data, comprising: receiving, from a plurality of sensors, multi-dimensional time series data corresponding to a plurality of original variables; transforming the multi-dimensional time series data to a lower dimension to define reduced-dimensional time series data; extracting, by a controller, a plurality of latent variables from the reduced-dimensional time series data and determining values of the plurality of latent variables in a first time period; initializing, by the controller, a loadings matrix corresponding to a set of latent variables of the plurality of latent variables; determining, by the controller, one or more principal predictor model parameters, by performing an iterative process which comprises:

(a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables; (c) updating the loadings matrix based on the calculated new loadings matrix; and (d) iteratively repeating (a) to (c) until the one or more principal predictor model parameters reach convergence.

Embodiment 2.2. The method according to Embodiment 2.1, wherein transforming the multi-dimensional time series data to a lower dimension comprises performing singular value decomposition (SVD) on the multi-dimensional time series data.

Embodiment 2.3. The method according to any one of Embodiments 2.1 to 2.2, further comprising generating a latent vector autoregressive (LaVAR) model based on the determined one or more principal predictor model parameters.

Embodiment 2.4. The method according to any one of Embodiments 2.1 to 2.3, wherein the principal predictor model comprises a maximum predicted variance (MPV) objective.

Embodiment 2.5. The method according to any one of Embodiments 2.1 to 2.4, wherein the estimation process simultaneously maximizes a covariance of the predicted values of the plurality of latent variables; or a covariance of predicted variability in the predicted values of the plurality of latent variables.

Embodiment 2.6. The method according to any one of Embodiments 2.1 to 2.5, wherein calculating a new loadings matrix comprises performing an eigen-decomposition on a matrix of the predicted values of the plurality of latent variables to calculate the new loadings matrix.

Embodiment 2.7. The method according to any one of Embodiments 2.1 to 2.6, further comprising determining the number of latent variables in the set of latent variables.

Embodiment 2.8. The method according to Embodiment 2.7, wherein determining the number of latent variables captures a target amount of predictable variations in the reduced-dimensional time series data by the latent variables.

Embodiment 2.9. The method according to any one of Embodiments 2.7 to 2.8, wherein determining the number of latent variables is based on a target proportion of predicted variance (PPV).

Embodiment 2.10. The method according to any one of Embodiments 2.1 to 2.9, further comprising determining an orthogonal complement of the loadings matrix to define a static loadings matrix.

Embodiment 2.11. A method for generating a principal predictor model from multi-dimensional time series data according to any one of Embodiments 2.1 to 2.10, further comprising: analyzing the multi-dimensional time series data corresponding to a dynamic system using the principal predictor model; generating one or more monitoring indices for prediction residuals and/or latent variables of the analyzed multi-dimensional time series data; and detecting an abnormality in the multi-dimensional time series data based on the one or more monitoring indices.

Embodiment 2.12. The method according to Embodiment 2.11, wherein generating one or more monitoring indices, comprises: a) generating one or more first monitoring indices for the prediction residuals; b) generating one or more second monitoring indices for the latent variables; and c) generating one or more combined monitoring indices based on the one or more first monitoring indices for the prediction residuals and the one or more second monitoring indices for the latent variables.

Embodiment 2.13. The method according to Embodiment 2.12, wherein the one or more first monitoring indices for the prediction residuals comprises a first Hotelling's index defined for the prediction residuals, a square prediction error (SPE) index, or a combination of the first Hotelling's index and the SPE index.

Embodiment 2.14. The method according to any one of Embodiments 2.12 to 2.13, wherein the one or more second monitoring indices for the latent variables comprises a second Hotelling's index defined for the predicted latent variables.

Embodiment 2.15. The method according to any one of Embodiments 2.11 to 2.14, wherein the method further comprises generating one or more overall monitoring indices for both the prediction residuals and the predicted latent variables by: determining a first Hotelling's index for the prediction residuals; determining a squared prediction error (SPE) index for the prediction residuals; combining the first Hotelling's index for the prediction residuals and the SPE index for the prediction residuals to generate one or more combined monitoring indices for the prediction residuals; determining a second Hotelling's index for the predicted latent variables; and combining the second Hotelling's index for the predicted latent variables with the one or more combined monitoring indices for the prediction residuals.

Embodiment 2.16. A method for identifying a detected abnormality in multi-dimensional time series data using a principal predictor model generated by the method of any one of Embodiment 2.1 to 2.15, comprising: determining a prediction error matrix based on differences between the predicted values of the multi-dimensional time series data and the actual values of the multi-dimensional time series data; decomposing the prediction error matrix to identify abnormality directions in the prediction error matrix; determining a reconstruction-based contributions (RBC) matrix comprising the contributions of each

variable to the detected abnormality; and analyzing the RBC matrix to identify the detected abnormality.

Embodiment 2.17. The method according to Embodiment 2.16, wherein the abnormality directions are used to reconstruct abnormality-free data.

Embodiment 2.18. The method according to Embodiment 2.17, wherein reconstructing the abnormality-free data comprises projecting the predicted error matrix onto the abnormality directions and subtracting the contributions of the detected abnormality from the multi-dimensional time series data.

Embodiment 2.19. A system for generating principal predictor models from multi-dimensional time series data, comprising: a plurality of sensors, configured to detect multi-dimensional time series data corresponding to a plurality of original variables; and a processing unit coupled to the plurality of sensors, the processing unit configured to: transform the multi-dimensional time series data to a lower dimension to define reduced-dimensional time series data; extract, by a controller, a plurality of latent variables from the reduced-dimensional time series data and determine values of the plurality of latent variables in a first time period; initialize, by the controller, a loadings matrix corresponding to a set of latent variables of the plurality of latent variables; determine, by the controller, one or more principal predictor model parameters, by performing an iterative process which comprises:

(a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables, and (c) updating the loadings matrix based on the calculated new loadings matrix; and (d) iteratively repeating (a) to (c) until the one or more principal predictor model parameters reach convergence.

Embodiment 2.20. A non-transitory computer-readable medium storing instructions which, when executed by one or more processors, cause the one or more processors to: receive, from a plurality of sensors, multi-dimensional time series data corresponding to a plurality of original variables; transform the multi-dimensional time series data to a lower dimension to define reduced-dimensional time series data; extract a plurality of latent variables from the reduced-dimensional time series data and determine values of the plurality of latent variables in a first time period; initialize a loadings matrix corresponding to a set of latent variables of the plurality of latent variables; determine one or more principal predictor model parameters by performing an iterative process which comprises: (a) predicting values of the plurality of latent variables based on the reduced-dimensional time series data and the loadings matrix, by using an estimation process which maximizes a covariance between the values of the plurality of latent variables and the predicted values of the plurality of latent variables; (b) calculating a new loadings matrix from the loadings matrix and the predicted values of the latent variables, and (c) updating the loadings matrix based on the calculated new loadings matrix; and (d) iteratively repeating (a) to (c) until the one or more principal predictor model parameters reach convergence.

Detailed Description of Embodiments

Embodiments generally relate to methods, systems and computer-readable media for dynamic process monitoring and/or fault detection, and in some embodiment for generating one or more principal predictor models for dynamic process monitoring and/or fault detection. Some embodiments relate to systems, methods and computer readable media for generating a principal predictor model from multi-dimensional time series data. A multi-dimensional time series is a time series having multiple variables which vary over time. A principal predictor model is a model which predicts outputs, behaviors or system variables of a dynamic system. Some embodiments relate to generating a principal predictor model from multi-dimensional time series data to analyze data in industrial processes, such as electrical mechanical and civil engineering systems, particularly those that require preventative maintenance. For example, the methods, systems and computer-readable media disclosed herein may be applied to monitor, analyze and predict large amounts of data in systems that record multi-variate time series data such as infrastructure and transportation systems, building heating and cooling systems, and industrial manufacturing processes. Embodiments disclosed herein may be used for quality and/or safety monitoring, fault identification and/or preventative maintenance.

Some embodiments relate to a method for generating a principal predictor model from multi-dimensional time series data for use in dynamic process monitoring and fault detection. The method may be referred to herein as a Latent Vector Autoregressive (LaVAR) estimation with a Maximum Predicted Variance (MPV) objective, or LaVAR-MPV. The method may also be referred to herein as a Principal Predictor Analysis (PPA) method. In some embodiments, the method is configured to capture the most predictable variances in a dynamic system.

In some embodiments, the PPA method begins by finding a projection matrix P that ensures the latent vector $v_k$ represents all the dynamics of the data. The objective is to maximize the covariance between the latent vector $v_k$ and its prediction $\hat{v}_k$, ensuring that the most predictable variances are captured. This process starts with an initial projection matrix P that satisfies the orthogonality condition $\mathbf{P^TP} = \mathbf{I}$. Using this initial P, the latent vectors $v_k$ are calculated, and the parameter matrices $\mathbf{B}_j$ are estimated by minimizing a least squares objective function. This involves solving for the parameter matrices using the Moore-Penrose pseudo-inverse. The term "calculate" and other forms (such as calculating, calculated) as used herein may be used to refer to, among other things, calculate, assesses, determine and/or estimate and other forms thereof.

The MPV objective is then defined to maximize the covariance of the prediction $\hat{v}_k$ with Loewner ordering, ensuring that the resulting covariance matrix is positive definite, and in some embodiments maximally positive definite. This is achieved by performing an eigen-decomposition on the covariance matrix and updating the projection matrix P iteratively until convergence. The algorithm iterates through these steps, updating the projection matrix P and recalculating the latent vectors $v_k$ until the covariance matrix converges to a solution that maximizes the predicted variances. The final projection matrix P and the parameter matrices $\mathbf{B}_j$ are then used to build the PPA model.

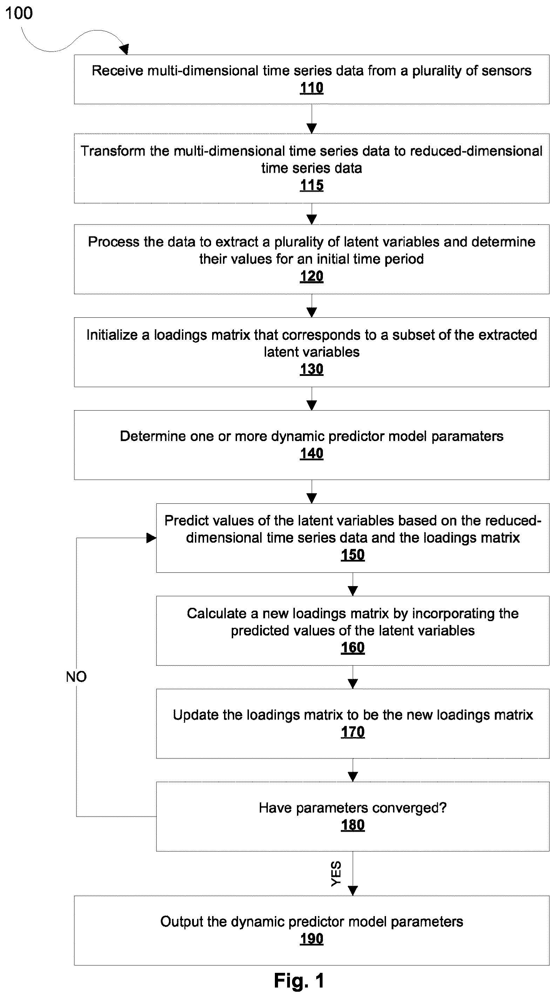

**Figure** 1 is a process flow diagram of a method 100 for generating a principal predictor model from multi-dimensional time series data, according to some embodiments. The method 100 involves, at 110 receiving multi-dimensional time series data from a plurality of sensors, where the data corresponds to a variety of original variables. The original variables thus correspond to the variables of the time series data; these variables may be observable variables of a system and may correspond to data gathered from sensors. The multi-dimensional time series data is then transformed into reduced-dimensional time series data at 115. The data is then processed by a controller at 120, which extracts a plurality of latent variables and determines their values for a specified initial time period. A latent variable is a variable which is not present in the original variables (e.g. is not a directly observed variable), but rather is inferred from one or more original variables.

At 130, the controller initializes a loadings matrix that corresponds to a set of the extracted latent variables. A loadings matrix is a matrix used to represent the relationship between observed variables and latent variables. The loadings matrix may contain coefficients, weights or other values that represent the relationship between observed variables and latent variables. For example, the loadings matrix may indicate how strongly each observed variable is associated with the latent variable. Higher values in the loadings matrix suggest a stronger relationship, indicating that the latent variable has more influence in explaining the observed data, and lower values in the loadings matrix suggest a weaker relationship between the observed variables, indicating that the latent variable has less influence in explaining the observed data. The controller then, at 140, determines one or more principal predictor model parameters through an iterative process. The iterative process involves, at 150, predicting the values of the latent variables based on the time series data and the initial loadings matrix. The prediction is performed using an estimation process that maximizes the covariance between the actual values of the latent variables and their predicted values.

Following the prediction at 150, the controller calculates a new loadings matrix at 160 by incorporating the predicted values of the latent variables. The new loadings matrix is then used to update the initial loadings matrix at 170. The iterative process of predicting latent variable values, calculating a new loadings matrix, and updating the loadings matrix is repeated until the principal predictor model parameters converge to a stable solution. At 180, the method may include determining whether the principal predictor model parameters have converged and, if they haven't the method reverts to 150. If it is determined that the principal predictor model parameters have converged, then the method may include outputting the principal predictor model parameters at 190.

In some embodiments, the method 100 further comprises outputting the principal predictor model. In some embodiments, the method 100 further comprises generating a latent vector autoregressive model based on the determined one or more principal predictor model parameters.

This method ensures that the principal predictor model captures the most predictable variances in the multi-dimensional time series data, making it highly effective for dynamic process monitoring and fault detection in complex systems. The iterative nature of the process allows for continuous refinement and optimization of the model parameters, leading to more accurate and reliable predictions.

Multi-dimensional time series data includes one or more datasets that track multiple variables over time. Multi-dimensional time series data may also be referred to as multivariate time series data. Unlike univariate time series, which monitor a single variable, multi-dimensional time series capture the interactions and dependencies between a plurality of variables. Multi-dimensional time series data may be obtained from various fields, including finance, where it might track various economic indicators simultaneously, or in environmental science, where it could monitor temperature, humidity, and wind speed together. In one example, multi-dimensional time series data may be used to track a plurality of variables across manufacturing processes. For example, a factory that produces electronic devices may collect data on several variables at regular intervals, such as the temperature of the production environment, humidity levels, machine vibration levels, power consumption of machinery, production speed (units produced per hour), and defect rate (number of defective units per batch). Each of these variables is recorded over time, creating a multi-dimensional time series dataset. By analyzing this data, the factory can identify patterns and correlations. For example, they might find that higher humidity levels correlate with an increased defect rate, or that certain vibration levels in machines predict maintenance needs.

Although the above example provides a few variables, multi-dimensional time series data may include hundreds or thousands of variables recorded over a period of time. Analyzing such multi-dimensional time series data can reveal complex patterns and relationships that are not apparent when examining each variable in isolation, or examining a limited number of variables. The multi-dimensional time series data may be used to generate a principal predictor model, configured to perform process monitoring, and/or detect or predict faults in a dynamic system. As the principal predictor model has been generated from the multi-dimensional time series data generated by the dynamic system, it is capable of accurately analyzing and predicting data related to the dynamic system.

In one embodiment, a principal predictor model may be utilized to predict faults in dynamic systems, for example, within an apparatus, machinery and/or within a process. The principal predictor model which has been generated from multi-dimensional time series data of a dynamic system, is configured to analyze multi-dimensional time series data collected from various sensors within the dynamic system. For example, in the electronic device factory example above, the sensors may monitor parameters such as vibration, temperature, and humidity levels. The model may predict an impending fault in a machine based on an observed increase in vibration levels coupled with elevated temperatures and high humidity over the past week. This predictive capability allows for proactive maintenance, thereby reducing downtime and preventing potential damage to the machinery. That is, the principal predictor model is capable of predicting faults within a dynamic system by analyzing multi-dimensional time series data corresponding to the dynamic system.

The principal predictor model may also be utilized to facilitate the adjustment of operational parameters in response to its outputs. For example, if the model indicates that the current operating conditions are likely to lead to a fault, the dynamic system may be automatically adjusted. In the example of the electronic device factory, the model may indicate an impending fault in a machine within the factory, and the machinery parameters may be adjusted to address or mitigate the impending fault, for example, by adjusting the machine's operating speed or cooling settings to mitigate the risk of an impending fault. This real-time adjustment in response to the principal predictor model's outputs may provide optimal performance of elements within the dynamic system, for example, enhancing overall efficiency and productivity of the machine.

Furthermore, the principal predictor model may be utilized to trigger maintenance activities based on its predictions. When the model forecasts that maintenance is required, it can generate alerts for the maintenance team, specifying the nature of the predicted issue and the recommended actions. In some embodiments, the model may forecast with accuracy and specificity where maintenance is required. For example, if the model detects a pattern of increasing vibration and temperature indicative of bearing wear in a machine, it can guide preventative maintenance to inspect and replace the bearings before a failure occurs. This predictive maintenance approach not only extends the lifespan of the dynamic system but also minimizes unexpected breakdowns and associated costs.

In some embodiments, the principal predictor model may be used to analyze data from a plurality of elements within a dynamic system, to monitor a process and guide preventative maintenance for a dynamic system. In some embodiments, the outputs of the principal predictor model may be used to monitor a dynamic system and identify correlations which lead to system faults. Therefore, the likelihood of a fault within the system may be reduced by using the principal predictor model to monitor the dynamic system. In the example of the electronic device factory, the principal predictor model may be used to analyze data from multiple machines across the factory floor to identify broader trends and correlations within data. For example, the model may identify that machines operating in certain environmental conditions, such as high humidity areas, are more prone to faults. Based on this process monitoring, the outputs of the model can be used to guide preventative maintenance. For example, the factory can adjust the system to enhance dehumidification systems in specific zones, to prevent the likelihood of faults and improve overall operational reliability of the factory.

In another example, a principal predictor model can be employed to enhance maintenance, fault prediction, and operational adjustments within an aviation engine. For example, the principal predictor model may be configured to analyze multi-dimensional time series data received from various sensors in the engine such as engine vibration, exhaust gas temperature, and oil pressure. If the model detects an unusual increase in vibration and a corresponding rise in exhaust gas temperature, the model may predict an impending fault in the turbine blades. This prediction can trigger preventive maintenance actions, such as inspecting and potential replacing of the affected components before a failure occurs. Additionally, the outputs of the principal predictor model may be used to automatically adjust operational parameters in real-time. For example, the outputs of the principal predictor model may feed into an avionic system, and be used to adjust the operating parameters of the aviation engine, for example, by reducing the engine's thrust or adjusting the fuel mixture to mitigate the risk of damage under detected stress conditions. By continuously monitoring and analyzing these parameters, the principal predictor model is utilized to assist the engine in operating efficiently and safely, thereby extending its service life and enhancing overall flight safety.

In some embodiments, multi-dimensional time series data may be received from one or more sensors that monitor various environmental or operational factors. In some embodiments, multi-dimensional time series data may be obtained from one or more data stores, such as a database. In some embodiments, multi-dimensional time series data may be received from one or more integrated platforms or systems which combine data from various sources. In some embodiments, multi-dimensional time series data may be obtained from historical data and/or past records. In some embodiments, multi-dimensional time series data may be received from devices, such as IoT devices that continuously gather data from connected systems. In some embodiments, multi-dimensional time series data may be received in real-time from one or more sensors.

In some embodiments, the plurality of sensors include a plurality of devices that detect and measure physical properties or changes in the environment (either natural environment of a digital environment), and convert these measurements into signals that can be read and analyzed. The plurality of sensors may include any sensors appropriate to obtain data. For example, the one or more sensors may be included as part of a monitoring system which tracks and records data as events occur. In some embodiments, the plurality of sensors may include, but are not limited to, one or more of temperature sensors, humidity sensors, pressure sensors, proximity sensors, light sensors, motion sensors, accelerometers, gyroscopes, magnetic sensors, gas sensors, sound sensors, vibration sensors, flow sensors, force sensors, infrared sensors, ultrasonic sensors, pH sensors, optical sensors, strain gauges, level sensors, image sensors, touch sensors, capacitive sensors, inductive sensors, piezoelectric sensors, chemical sensors, biosensors, radiation sensors, color sensors, thermal sensors, position sensors, displacement sensors, speed sensors, torque sensors, current sensors, voltage sensors, biometric sensors, electromagnetic sensors, radiation sensors, acoustic sensors, particular matter sensors, RFID sensors, LIDAR sensors, and/or $CO_2$ sensors. It will be appreciated that the particular sensors that are used within the methods and systems disclosed herein to collect the multi-dimensional time series data will depend upon the specific field of use. For example, the plurality of sensors used to obtain multi-dimensional time series data in an industrial processing environment may be different to the plurality of sensors used to obtain multi-dimensional time series data in a transport system.

An existing approach to modeling dynamic multi-dimensional time series is full-dimensional dynamic series modelling. Full-dimensional dynamic series modeling involves analyzing time series data by considering all available variables or dimensions without reducing their number. This approach aims to capture the complete complexity and

interactions within the dataset, providing a comprehensive understanding of the system's behavior over time. Techniques such as vector autoregression (VAR) or state-space models may be used to handle the high-dimensional data, allowing for the modeling of intricate relationships and dependencies among variables. While this method can offer more detailed insights, it also requires significant computational resources and can be more challenging to interpret due to the sheer volume of information.

The measurement vector ($y_k$) from a dynamic system forms a time series, which is considered serially correlated if there is a non-zero correlation between different time points. A full-dimensional dynamic series can be represented by its best prediction and the unpredictable white noise. Various models, such as state space or autoregressive integrated moving average (ARIMA) may be used for prediction. Additionally, for vector autoregressive (VAR) models, the prediction depends on a finite window of past data.

Let $\boldsymbol{y}_k \in \mathfrak{R}^p$ be the measurement vector of variables at time $k$ from a dynamic system, which forms a time series $\{\boldsymbol{y}_k\}_{k=1}^{N+s}$ with $\mathbb{E}\{\boldsymbol{y}_k\} = \boldsymbol{0}$. The series is considered to be serially correlated if $\mathbb{E}\{\boldsymbol{y}_k \boldsymbol{y}_{k-j}^T\} \neq \boldsymbol{0}$. for some $j > 0$. A serially correlated time series $\{\boldsymbol{y}_k\}$ is defined as a reduced- dimensional dynamic (RDD) series if there exists $\boldsymbol{a} \neq \boldsymbol{0} \in \mathfrak{R}^p$ such that $\boldsymbol{a}^T\boldsymbol{y}_k$ is serially uncorrelated. Otherwise, the time series is defined as a full-dimensional dynamic (FDD) series.

A full-dimensional dynamic series may be represented by its best prediction $\hat{\boldsymbol{y}}_k$ and the unpredictable white noise $\boldsymbol{e}_k$ as shown in equation (1).

$$\boldsymbol{y}_k = \widehat{\boldsymbol{y}}_k + \boldsymbol{e}_k \qquad (1)$$

The predictor $\hat{\boldsymbol{y}}_k \in \mathfrak{R}^p$ depends on the past data $\{\boldsymbol{y}_k\}_{-\infty}^{k-1}$ and $\boldsymbol{e}_k$ (which is the unpredictable white noise, but may also be referred to as the innovation) does not depend on the past data $\{\boldsymbol{y}_k\}_{-\infty}^{k-1}$. The predictor $\hat{\boldsymbol{y}}_k$ may use various models such as state space models or an autoregressive integrated moving average (ARIMA). For vector autoregressive (VAR) models, the prediction $\hat{\boldsymbol{y}}_k \in \mathfrak{R}^p$ depends on a finite window of the past data $\{\boldsymbol{y}_k\}_{k-s}^{k-1}$ which is given by equation (2).

$$\widehat{\boldsymbol{y}}_k = \sum_{j=1}^{s} \mathbf{A}_j \boldsymbol{y}_{k-j} \qquad (2)$$

where $\mathbf{A}_j$'s are generally full rank matrices. The estimation of $\mathbf{A}_j$'s may be found by using maximum likelihood or least squares methods.

Reduced-dimensional dynamic (RDD) series modeling is a technique used to simplify the analysis of complex time series data by reducing the number of variables or dimensions involved. By reducing the dimensions, the most significant patterns and trends within the data may be identified. The model may then more efficiently capture the underlying dynamics of the system, making it easier to interpret and predict future behavior. Additionally, the computational load is significantly decreased as the number of variables or dimensions is minimized. Consequently, the memory required for the model to perform the analysis is also reduced, as fewer data points need to be stored and processed. This efficiency not only speeds up computations but also makes it feasible to analyze larger datasets with limited computational resources.

In some embodiments, multi-dimensional time series data may be transformed into a lower-dimensional space. In some embodiments, the multi-dimensional time series data may be transformed into a lower-dimensional space by projecting the multi-dimensional time series data into a lower dimension to define reduced-dimensional time series data. Reduced dimensional time series data may refer to time series data that has been transformed to decrease the number of dimensions or variables within the time series data. That is, reduced-dimensional time series data may refer to time series data that has been transformed from its original multi-dimensional form to a lower-dimensional form. In some embodiments, the multi-dimensional time series data may be transformed into a lower-dimensional space using Principal Component Analysis (PCA). In some embodiments, the multi-dimensional time series data may be transformed into a lower dimensional space using s-TNE. In some embodiments, transforming the multi-dimensional time series data into a lower dimensional space may comprise performing singular value decomposition on the multi-dimensional time series data. In some embodiments, the transformation to a lower dimensional space may include data preprocessing. In some embodiments, data preprocessing may include normalizing the data to ensure all features are on the same scale, for example, by standardizing each feature to have a mean of zero and a standard deviation of one. Any missing values in the dataset may be handled through imputation or removal, and noise may be reduced by applying appropriate filtering techniques. Following preprocessing, a covariance matrix of the data is computed to understand the variance relationships between variables. Eigen decomposition is then performed on the covariance matrix to obtain the eigenvalues and eigenvectors, where the eigenvectors represent the directions of maximum variance, known as principal components, and the eigenvalues indicate the magnitude of variance in these directions. The eigenvalues are sorted in descending order, and the top $k$ eigenvectors corresponding to the largest eigenvalues are selected as the principal components. These principal components act as dynamic latent variables, capturing the most significant variance in the original data. Finally, the original data is projected onto these selected principal components by multiplying the data matrix with the matrix of chosen eigenvectors, resulting in a lower-dimensional representation that captures the most significant variance in the original data.

Dynamic latent variables may be extracted and/or contrived from multi-dimensional time series data. Dynamic latent variables refer to hidden or unobserved variables within a system that change over time and influence the observable data. These variables are not directly measurable but can be inferred through statistical models or algorithms. DLVs assist in understanding and predicting complex, high-dimensional time series data by capturing the underlying time-dependent patterns. DLVs represent the predictable content in the data, allowing for a more compact representation of the dynamic system, by projecting the original high-dimensional data into a lower-dimensional space.

In some embodiments, the values of the plurality of latent variables extracted from the time series data are determined within a first time period. The first time period may refer to a specific, defined duration during which the controller extracts and determines the values of the latent variables from the time series data. In some embodiments, the first time period may refer to a subset of time across which the multi-dimensional time series data occurs. In some embodiments, the first time period may refer to a period of time from a defined point, for example, the period of time starting from time $k$.

In some embodiments, transforming the multi-dimensional time series data to a lower dimension to define reduced-dimensional time series data comprises performing singular value decomposition (SVD) on the multi-dimensional time series data. Performing SVD may, for example, comprise decomposing, or factorizing, a matrix into three matrices. The three matrices may for instance correspond to a rotation matrix, a re-scaling matrix and another rotation matrix. Performing SVD on the multi-dimensional time series data may

comprise transforming the time series data to be represented as a matrix, A, and decomposing the matrix into the product of three matrices, U, $\Sigma$, and V$^T$. U and V orthogonal matrices (or rotation matrices), and $\Sigma$ is a diagonal matrix which contains the singular values of the time series data matrix (the re-scaling matrix). The plurality of latent variables may then be extracted from the resultant decomposition.

In the case of FDD series, the predictor $\hat{y}_k$ possesses the same dimensionality as the measurement $y_k$. However, an RDD time series is different from an FDD series in that variations within a subspace of $y_k$ are time dependent or predictable from past and/or historical data. Conversely, for an RDD series, the predictor $\hat{v}_k$ has a reduced dimensionality compared to the measurement $y_k$ and can be represented by equation (3).

$$ \boldsymbol{y}_k = \mathbf{P}\widehat{\boldsymbol{v}}_k + \boldsymbol{e}_k \qquad\qquad (3) $$

In equation 3, $\hat{\boldsymbol{v}}_k \in \mathfrak{R}^\ell$ represents the predicted latent vector derived from past data, and may also be referred to as the predictor i.e., $\hat{\boldsymbol{v}}_k = f(\boldsymbol{y}_{k-1}, \cdots, \boldsymbol{y}_{k-s}, \cdots)$. Here, $\boldsymbol{e}_k \in \mathfrak{R}^p$ denotes a serially independent vector which does not depend on past data, i.e., $\mathbb{E}\left\{\boldsymbol{e}_k \boldsymbol{y}_{k-j}^T\right\} = \boldsymbol{0}$ for all $j > 0$. The matrix $\mathbf{P} \in \mathfrak{R}^{p \times \ell}$ has full column rank $l < p$. Consequently, for any vector $\mathbf{a} \in \mathfrak{R}^p$ orthogonal to $\mathbf{P}$, the relationship $\mathbf{a}^T \boldsymbol{y}_k = \mathbf{a}^T \boldsymbol{e}_k$ holds, rendering it unpredictable from past data. The dimension $\ell$ may be referred to as the dynamic latent dimension (DLD), or the number of dynamic latent variables.

In some embodiments, the prediction by $\hat{\boldsymbol{v}}_k$ may be subsequently derived using the following method. Given that $\mathbf{P} \in \mathfrak{R}^{p \times \ell}$ has full column rank, there exists another full column rank matrix $\mathbf{R} \in \mathfrak{R}^{p \times \ell}$ such that $\mathbf{R}^T\mathbf{P} = \mathbf{I}$. Pre-multiplying $\mathbf{R}^T$ on equation (3) yields equation (4).

$$ \boldsymbol{v}_k = \mathbf{R}^T \boldsymbol{y}_k = \widehat{\boldsymbol{v}}_k + \mathbf{R}^T \boldsymbol{e}_k = \widehat{\boldsymbol{v}}_k + \boldsymbol{\varepsilon}_k \qquad\qquad (4) $$

In equation (4), $\varepsilon_k = \mathbf{R}^T \boldsymbol{e}_k$ indicates that the innovation does not depend on the past measurement data. Consequently, $\hat{\boldsymbol{v}}_k$ serves as the optimal predictor of $\boldsymbol{v}_k$.

The latent predictor model for $\hat{\boldsymbol{v}}_k$ can be formulated as any linear or nonlinear function of its past values $\left\{\boldsymbol{v}_k\right\}_{-\infty}^{k-1}$, as expressed in equation (5).

$$\widehat{\boldsymbol{v}}_k = \mathbb{E}\{\boldsymbol{v}_k | \{\boldsymbol{v}_k\}_{-\infty}^{k-1}\} = g(\boldsymbol{v}_{k-1}, \cdots, \boldsymbol{v}_{k-s}, \cdots) \tag{5}$$

In some embodiments, to parameterize this predictor model, univariate autoregressive models, latent vector autoregressive model, or state space model may be used. Additionally, in some embodiments, a state space model with a deterministic control sequence $\{u_k\}$ for latent system identification may be used.

The methods described herein diverge from existing methodologies such as those applied in econometrics and statistics, which utilize the original data $\boldsymbol{y}_k$ to predict the DLVs, i.e., $\hat{\boldsymbol{v}}_k = f(y_{k-1}, \cdots, y_{k-s}, \cdots)$. Such an existing approach results in a loss of reduced dimensional parameterization, and therefore it is non-parsimonious.

In some embodiments, the method 100 considers a latent vector autoregressive (LaVAR) model as delineated in equation (6). However, it will be appreciated that alternative models, such as the state space model, may be used.

$$\widehat{\boldsymbol{v}}_k = \sum_{j=1}^{s} \mathbf{B}_j \boldsymbol{v}_{k-j} \tag{6}$$

When equation (3) is combined with equation (6), the Reduced Rank VAR (RRVAR) model is obtained in equation (7), in which the VAR parameter matrices $\{\mathbf{A}_j = \mathbf{PB}_j\mathbf{P}^{\mathrm{T}}\}$ have reduced rank.

$$\boldsymbol{y}_k = \mathbf{P}\sum_{j=1}^{s} \mathbf{B}_j \boldsymbol{v}_{k-j} + \boldsymbol{e}_k = \sum_{j=1}^{s} \mathbf{PB}_j\mathbf{R}^{\mathrm{T}}\boldsymbol{y}_{k-j} + \boldsymbol{e}_k \tag{7}$$

The matrix P cannot be uniquely identified from the data $\boldsymbol{y}_k$ due to its bilinear relationship with $\hat{\boldsymbol{v}}_k$. Therefore, in some embodiments, specific requirements may be imposed on the bilinear decomposition. In some embodiments, $\boldsymbol{v}_k$ may be realized with identity covariance via an oblique projection. In some embodiments, an orthogonal P, i.e., $\mathbf{P}^{\mathrm{T}}\mathbf{P} = \mathbf{I}$, may be identified such that the magnitude information is retained in $\hat{\boldsymbol{v}}_k$ and is maximized. As such, $\overline{\mathbf{P}}$ may be chosen as the orthogonal complement of P such that $[\mathbf{P}\ \overline{\mathbf{P}}]$ is orthogonal, i.e., such that equation (8) holds.

$$[\mathbf{P}\ \overline{\mathbf{P}}][\mathbf{P}\ \overline{\mathbf{P}}]^{\mathrm{T}} = [\mathbf{P}\ \overline{\mathbf{P}}]^{\mathrm{T}}[\mathbf{P}\ \overline{\mathbf{P}}] = \mathbf{I} \tag{8}$$

With this relation, equation (3) may then be decomposed using equation (4) to produce equation (9), in which $\varepsilon_k = \mathbf{P}^{\mathrm{T}}\boldsymbol{e}_k$ and $\overline{\varepsilon}_k = \overline{\mathbf{P}}^{\mathrm{T}}\boldsymbol{e}_k$ are serially independent noise.

$$\boldsymbol{y}_k = \mathbf{P}\widehat{\boldsymbol{v}}_k + [\mathbf{P}\ \overline{\mathbf{P}}][\mathbf{P}\ \overline{\mathbf{P}}]^{\mathrm{T}}\boldsymbol{e}_k = \mathbf{P}\boldsymbol{v}_k + \overline{\mathbf{P}}\overline{\varepsilon}_k \tag{9}$$

Equation (9) indicates that the time-dependent content in the data is entirely contained in $\boldsymbol{v}_k$. The VAR parameters $\mathbf{B}_j \in \mathfrak{R}^{\ell \times \ell}$ for $i$ = 1, 2, ..., s and the loadings $\mathbf{P}, \overline{\mathbf{P}}$ are to be estimated from the data $\boldsymbol{y}_k$.

After the plurality of latent variables are extracted from the multi-dimensional time series data, a loadings matrix is initialized which corresponds to a set of latent variables of the plurality of latent variables. The loadings matrix may indicate the relationship between observed variables and latent variables. Each element in the loadings matrix may indicate the weight or contribution of a latent variable to an observed variable. That is, the loadings matrix may describe how much each latent variable influences the observed data. The loadings matrix may be represented by P.

In some embodiments, the method of generating a principal predictor model uses LaVAR modeling with an aim to find $\mathbf{P} \in \mathfrak{R}^{p \times \ell}$ to make the latent vector $\boldsymbol{v}_k \in \mathfrak{R}^{\ell}$ represent all dynamics of the data. From equations (4) and (9), it can be seen that the LaVAR model projects $\boldsymbol{y}_k$ to a lower-dimensional $\boldsymbol{v}_k$ and then makes $\boldsymbol{v}_k$ most predictable from its past values. From equation (7), it is seen that the parameter matrices are in multi-linear forms. Therefore, in some embodiments, the method may utilize an alternating optimization approach.

After the loadings matrix is initialized, one or more principal predictor model parameters may be determined. The model parameters define the model's behavior and its ability to make accurate predictions. The model parameters of the principal predictor model enable the model to adapt over time to improve prediction accuracy. In some embodiments, these parameters may include coefficients. In some embodiments, the coefficient may adjust based on new data, allowing the model to update its predictions dynamically. For instance, in time series forecasting, parameters might include weights for recent observations that change as new data points are added. Additionally, the parameters may include decay factors to gradually reduce the influence of older data. In some embodiments, parameters may include any parameters suitable for the model. For example, parameters may include, but are not limited to, weights, cluster centroids, decision thresholds, transition probabilities, latent factors, kernel parameters, bias terms, principal components, node weights, eigenvalues and eigenvectors, transition and emission probabilities, basis functions, means and/or covariances. The model parameters may be represented herein by $\{\mathbf{B}_j\}$.

The model parameters may be determined using an iterative process. The iterative process may include predicting the values of multiple latent variables. These predictions are based on time series data and an initial loadings matrix. The estimation process used herein aims to maximize the covariance between the actual values of the latent variables and their predicted values.

A new loadings matrix is then calculated. This new matrix is derived from the initial loadings matrix and the predicted values of the latent variables. The process begins by taking the initial loadings matrix, which represents the initial assumptions or estimates of the relationships between the observed data and the latent variables. Using the predicted values of the latent variables, the controller recalculates the loadings matrix to better reflect the current state of the data. Following the calculation of the new loadings matrix, the process involves updating the loadings matrix with the new loadings matrix. That is, the new loadings matrix becomes the updated loadings matrix which is then used in subsequent iterations.

The predicted values are then calculated based on the updated loading matrix, and the process is repeated to calculate a new loadings matrix. The steps of predicting the values, calculating a new loadings matrix and updating the loadings matrix with the new loadings matrix, are repeated until the one or more principal predictor model parameters converge, or reaches convergence. In some embodiments, convergence may refer to the point at which the principal predictor model parameters stabilize. For example, this may mean that after several iterations of predicting latent variable values, calculating the loadings matrix and updating the loadings matrix, the changes in the parameters become negligible. That is, further iterations do not significantly alter the values of these parameters, meaning they reach a stable state where further iterations do not significantly change the parameters.

In some embodiments, convergence is achieved when the model parameters reach a steady state, indicating that the model has achieved an optimal state. In some embodiments, this may indicate that the model sufficiently captures the underlying patterns and relationships within the data. In some embodiments, convergence may be determined by setting a predefined threshold for changes in the model parameters, such that when the difference between successive iterations falls below this threshold, convergence is determined. In some embodiments, convergence may be determined by defining a maximum number of iterations, such that if the process reaches the maximum number of iterations, it is assumed to have converged, even if the parameters have not stabilized completely. In some embodiments, convergence may be determined by observing when the value of the objective function is optimized, and may further include determining convergence when the change in the objective function value between iterations is below a certain threshold. In some embodiments, convergence may be determined by monitoring the norm of the gradient (or derivative) of the objective function, such that when the norm becomes sufficiently small, it indicates that the parameters are no longer changing significantly, and convergence is assumed. In some embodiments, convergence may be determined by checking the stability of the parameters, and if the parameters do not change significantly over a set number of iterations, convergence is assumed. In some embodiments, a likelihood ratio test may be used to determine if the model parameters have converged by comparing the likelihoods of successive iterations. In some embodiments, convergence may be determined using cross-validation techniques to assess the performance of the model on different subsets of the data, and convergence is assumed when the performance metrics stabilize.

At convergence, the iterative process is stopped as the model is determined to have reached an optimal configuration. In some embodiments, an optimal configuration may indicate that additional iterations would not provide any substantially significant change and/or improvement to the model parameters.

In some embodiments, assuming a P is chosen that satisfies $\mathbf{P}^{\mathbf{T}}\mathbf{P} = \mathbf{I}$, $\{v_k\}$ can be calculated to estimate the parameters of the PPA model, $\{\mathbf{B}_j\}$, by minimizing the least squares objective, as shown in equation (10).

$$\max_{\mathbb{B}} J = \sum_{k=s+1}^{s+N}\left\|v_k - \sum_{j=1}^{s}\mathbf{B}_j\, v_{k-j}\right\|^2 = \|\mathbf{V}_s - \mathbb{V}\mathbb{B}\|_F^2 \qquad (10)$$

where $\|\cdot\|_F$ denotes the Frobenius norm and:

$$\mathbb{V} = [\mathbf{V}_{s-1}\ \ \mathbf{V}_{s-2}\ \ \cdots\ \ \mathbf{V}_0] \qquad (11)$$

$$\mathbb{B} = [\mathbf{B}_1\ \ \mathbf{B}_2\ \ \mathbf{B}_s]^{\mathrm{T}} \qquad (12)$$

$$V_i = [v_{i+1} \ \ v_{i+2} \ \cdots \ v_{i+N}]^T = Y_i R \quad i = 0, 1, \ldots, s \qquad (13)$$

Where $Y_i = [y_{i+1} \ y_{i+2} \cdots V_{i+N}]^T$ and $Y_i$ is a sub-matrix from $Y = [y_1 \ y_2 \cdots y_N \cdots y_{s+N}]^T$.

The solution for $\mathbb{B}$ can be found from equation (10) as equation (14), where $\mathbb{V}^+$ is the Moore-Penrose pseudo-inverse.

$$\mathbb{B} = (\mathbb{V}^T \mathbb{V})^{-1} \mathbb{V}^T V_s = \mathbb{V}^+ V_s \qquad (14)$$

The predicted $V_s$ is given by equation (15), which then yields equation (16), because $\mathbb{V}\mathbb{V}^+\mathbb{V}\mathbb{V}^+ = \mathbb{V}\mathbb{V}^+$ using $\mathbb{V}\mathbb{V}^+\mathbb{V} = \mathbb{V}^+$.

$$\widehat{V}_s = \mathbb{V}\mathbb{B} = \mathbb{V}\mathbb{V}^+ V_s \qquad (15)$$

$$\widehat{V}_s^T \widehat{V}_s = V_s^T \mathbb{V}\mathbb{V}^+ \mathbb{V}\mathbb{V}^+ V_s = V_s^T \mathbb{V}\mathbb{V}^+ V_s = V_s^T \widehat{V}_s \qquad (16)$$

In some embodiments, the method of generating a principal predictor model may comprise an MPV objective. The MPV objective in the LaVAR model aims to maximize the covariance of the model's prediction. Maximizing the covariance of the predictions in the model enhances the model's ability to capture the relationships and dependencies among the variables. When the covariance is maximized, the model more accurately reflects the true variability and interconnections within the data. This enables the model to achieve more accurate and reliable predictions because the model can account for a wider range of possible future scenarios. That is, the MPV objection ensures that the predictions are not just focused on a narrow set of outcomes but may account for various potential states, improving the overall performance and flexibility of the model to accurately capture the patterns within the multi-dimensional time series data.

In some embodiments, the MPV objective is included in the estimation process of the method 100. For example, the estimation process may maximize a covariance between the values of the plurality of latent variables and the predicted values of the plurality of latent variables. In some embodiments, the estimation process simultaneously maximizes a covariance of the predicted values of the plurality of latent variables. In some embodiments, the estimation process simultaneously maximizes a covariance of predicted variability in the predicted values of the plurality of latent variables.

In some embodiments, the MPV objective may comprise, using equation (16) and given an initial P, maximizing the covariance of the prediction $\hat{v}_k$. In some embodiments, this may be maximized with Loewner ordering, which is given by equation (17).

$$\max_{P} \succ \widehat{\Sigma}_{\hat{v}} = \widehat{V}_s^T \widehat{V}_s / N = \widehat{V}_s^T V_s / N \qquad (17)$$

$$\text{s.t.} \qquad P^T P = I$$

The notation $\max_{P} \succ$ means that the resulting $\hat{\Sigma}_{\hat{v}}$ is maximally positive definite for all possible P satisfying equation (17).

In some embodiments, the MPV objective maximizes the covariance between $v_k$ and its prediction $\hat{v}_k$. Alternatively or additionally, in some embodiments, the MPV objective maximizes the covariance of the prediction $\hat{v}_k$. The realization of the MPV objective may be analogous to that of partial least squares (PLS), which maximizes the covariance between two data matrices. In some embodiments, the MPV objective also maximizes the covariance of the predicted variability in the DLVs.

In some embodiments, the following method is used to solve P iteratively from the LaVAR-MPV objective.

With an initial $P \in \Re^{p \times \ell}$ to calculate $\hat{V}_s$ from equation (14), performing an eigen-decomposition on equation (18).

$$\mathbf{Y}_S^{\mathrm{T}} \widehat{\mathbf{V}}_S \widehat{\mathbf{V}}_S^+ \mathbf{Y}_S / N = \mathbf{W} \mathbf{\Lambda} \mathbf{W}^{\mathrm{T}} \qquad (18)$$

Where A contains the eigenvalues in a non-increasing order. An optimal solution to (17) is found by updating equation (19) and iterating the above procedure until convergence.

$$\mathbf{P} = \mathbf{W}(:, 1 : \ell) \qquad (19)$$

After convergence, equation (20) contains the variances of $\ell$ DLVs. In some embodiments, after convergence, the method may include determining an orthogonal complement of the loadings matrix to define a static loadings matrix $\overline{\mathbf{P}}$. In some embodiments, $\overline{\mathbf{P}} = \mathbf{W}(:, \ell + 1 : p)$ may be chosen.

$$\widehat{\mathbf{\Sigma}}_{\widehat{\boldsymbol{v}}} = \mathbf{\Lambda}(1 : \ell, 1 : \ell) = diag(\lambda_1, \lambda_2, \cdots, \lambda_\ell) \qquad (20)$$

Since,

$$\begin{aligned}
\widehat{\mathbf{V}}_s &= \widehat{\mathbf{V}}_s \widehat{\mathbf{V}}_s^T \widehat{\mathbf{V}}_s \\
&= \widehat{\mathbf{V}}_s (\widehat{\mathbf{V}}_s^{\mathrm{T}} \widehat{\mathbf{V}}_s)^{-1} \widehat{\mathbf{V}}_s^{\mathrm{T}} \widehat{\mathbf{V}}_s \\
&= \widehat{\mathbf{V}}_s (\widehat{\mathbf{V}}_s^{\mathrm{T}} \widehat{\mathbf{V}}_s)^{-1} \widehat{\mathbf{V}}_s^{\mathrm{T}} \mathbf{V}_s \\
&= \widehat{\mathbf{V}}_s \widehat{\mathbf{V}}_s^+ \mathbf{V}_s
\end{aligned}$$

From (17), (18), and (19), it can be seen that:

$$\widehat{\mathbf{\Sigma}}_{\widehat{\boldsymbol{v}}} = \mathbf{V}_s^{\mathrm{T}} \widehat{\mathbf{V}}_s \widehat{\mathbf{V}}_s^+ \mathbf{V}_s / N = \mathbf{P}^{\mathrm{T}} \mathbf{Y}_s^{\mathrm{T}} \widehat{\mathbf{V}}_s \widehat{\mathbf{V}}_s^+ \mathbf{Y}_s \mathbf{P} / N = \mathbf{P}^{\mathrm{T}} \mathbf{W} \mathbf{\Lambda} \mathbf{W}^{\mathrm{T}} \mathbf{P} \qquad (21)$$

In general, $\mathbf{P}$ can be linearly represented with $\mathbf{W}$ since $\mathbf{W}$ forms an orthogonal basis. To make $\widehat{\mathbf{\Sigma}}_{\widehat{\boldsymbol{v}}}$ maximally positive-definite with an orthogonal $\mathbf{P} \in \mathfrak{R}^{p \times \ell}$, a $\mathbf{P}$ may be chosen such that $\mathbf{P} = \mathbf{W}(:, 1 : \ell)$, i.e. the $\ell$ eigenvectors of the leading eigenvalues. Therefore, equation (20) holds after convergence. A $\overline{\mathbf{P}} = \mathbf{W}(:, \ell + 1 : p)$ may be chosen that makes it orthogonal to $\mathbf{P}$.

Since the rank of the matrix in equation (18) is no greater than $\ell$, its eigenvalues beyond $\ell$ are all zero. Therefore, the choice $\overline{\mathbf{P}} = \mathbf{W}(:, \ell + 1 : p)$ gives no particular physical significance of the static loadings. In some embodiments, the static variations are decomposed similar to that of PCA, which provides a decreasing order of the captured variance for the static components. For example, represent $\overline{\mathbf{Y}}_s = \mathbf{Y}_s - \mathbf{V}_s \mathbf{P}^{\mathrm{T}}$, and it can be seen that the rank of $\overline{\mathbf{Y}}_s$ is no more than $p - \ell$ due to the orthogonal projection. Therefore, performing SVD on $\overline{\mathbf{Y}}_s / \sqrt{N} = \overline{\mathbf{U}} \overline{\mathbf{D}} \overline{\mathbf{V}}^{\mathrm{T}}$ equations (23) to (27) may be chosen. Such solutions provided by equations (23) to (27) satisfy equation (9).

$$\overline{\mathbf{P}} = \overline{\mathbf{V}}(:, 1 : p - \ell) \qquad (23)$$

$$\overline{\mathbf{E}} = \overline{\mathbf{U}}(:, 1 : p - \ell) \overline{\mathbf{D}}(1 : p - \ell, 1 : p - \ell) \sqrt{N} \qquad (24)$$

$$\overline{\boldsymbol{\varepsilon}}_k = \overline{\mathbf{P}}^{\mathrm{T}} \boldsymbol{y}_k \qquad (25)$$

$$\widehat{\mathbf{\Sigma}}_{\overline{\boldsymbol{\varepsilon}}} = \overline{\mathbf{E}}^{\mathrm{T}} \overline{\mathbf{E}} / N = \overline{\mathbf{D}}^2(1 : p - \ell, 1 : p - \ell) \qquad (26)$$

$$\mathbf{Y}_s = \mathbf{V}_s \mathbf{P}^T + \overline{\mathbf{E}} \overline{\mathbf{P}}^T \qquad\qquad (27)$$

To initialize the algorithm, **P** is chosen to be the first $\ell$ principal component loadings of $\mathbf{Y}_s$.

In some embodiments, a principal predictor model may be generated using the following method. First, the method forms a matrix $\mathbf{Y}_s$ from the time series data, ensuring it has zero mean and unit variance. Next, the method performs Singular Value Decomposition (SVD) on $\mathbf{Y}_s$ to obtain $\mathbf{Y}_s = \mathcal{U}_s \mathcal{D}_s \mathcal{V}_s^T$. The method then initializes **P** using the first $\ell$ columns of $\mathcal{V}_s$. In the iterative calculation phase, the method updates **V** by multiplying **Y** with **P** and forms a new matrix $\mathbb{V}$. This is followed by an eigen-decomposition to update **P**. The method then repeats the iterative calculation phase until convergence. In some embodiments, the method performs SVD on the converged matrix and selects parameters, setting values to zero if they fall below a certain threshold.

In some embodiments, the method for generating a principal predictor model is defined by Algorithm 1, which is defined as follows:

1. Form $\mathbf{Y_s} \in \mathfrak{R}^{N \times p}$ from $\{\boldsymbol{y}_k\}_{k=1+s}^{N+s}$ and scale $\mathbf{Y}_s$ to zero mean and unit variance. Form $\mathbf{Y} \in \mathfrak{R}^{(N+s) \times p}$ from $\{\boldsymbol{y}_k\}_{k=1}^{N+s}$ and scale **Y** according to the scaling of $\mathbf{Y}_s$.

2. Perform SVD on $\mathbf{Y}_s$ as:

$$\mathbf{Y}_s = \mathcal{U}_s \mathcal{D}_s \mathcal{V}_s^T$$

and initialize $\mathbf{P} = \mathcal{V}_s(:,1:\ell)$ for a selected $\ell$.

3. Repeat:

Calculate **V = YP** and form $\mathbb{V} = [\mathbf{V}_{s-1} \; \mathbf{V}_{s-2} \; \cdots \; \mathbf{V}_0]$ from **V**.

Perform eigen-decomposition in equation (18) and calculate $\mathbf{P} = \mathbf{W}(:, \ell : l)$.

4. Until convergence.

5. Perform SVD on $\overline{\mathbf{Y}}_s / \sqrt{N} = \overline{\mathbf{U}}\,\overline{\mathbf{D}}\,\overline{\mathbf{V}}^T$ and choose $\overline{\mathbf{P}} = \overline{\mathbf{V}}(:,1 : p - \ell)$.

In some embodiments, the method 100 further comprises determining the number of latent variables in the set of latent variables. In some embodiments, determining the number of latent variables captures a target amount of predictable variations in the reduced-dimensional time series data by the latent variables. In some embodiments, the number of DLVs $\ell$ may be chosen to capture the most predictable variations in the data by the DLVs so that there is effectively little predictable variation left in the residuals. In some embodiments, for example, in process monitoring, a proportion of predicted variance (PPV) is used to select the number of DLVs. That is, in some embodiments, determining the number of latent variables is based on a target cumulative percent of predicted variance. Given $\hat{\boldsymbol{v}}_k$ the corresponding prediction $\hat{\boldsymbol{y}}_k = \mathbf{P}\hat{\boldsymbol{v}}_k$. The cumulative predicted variance (CPV) with $\ell$ DLVs is:

$$\mathrm{CPV}(l) = \mathrm{trace}\left(\widehat{\boldsymbol{\Sigma}}_{\widehat{\boldsymbol{y}}}\right) = \mathrm{trace}\left(\mathbf{P}\widehat{\boldsymbol{\Sigma}}_{\widehat{\boldsymbol{v}}}\mathbf{P}^T\right)$$

If $\mathrm{trace}(\widehat{\Sigma}_{\hat{\mathbf{y}}}(p))$ is used to denote the cumulative predicted variance with all $p$ DLVs, the PPV is:

$$\mathrm{PPV}(l) = \frac{\mathrm{trace}\left(\widehat{\boldsymbol{\Sigma}}_{\widehat{\boldsymbol{y}}}\right)}{\mathrm{trace}\left(\widehat{\boldsymbol{\Sigma}}_{\widehat{\boldsymbol{y}}}(p)\right)}$$

In some embodiments, the generated principal predictor model may be built with as many DLVs as there are dimensions, that is, with as many as $p$ DLVs. Since **P** is orthogonal, the cumulative predicted variance of the $p$ DLVs based on equation (20) is:

$$\text{CPV}(\ell) = \text{trace}\left(\widehat{\boldsymbol{\Sigma}}_{\hat{\boldsymbol{y}}}\right) = \text{trace}\left(\widehat{\boldsymbol{\Sigma}}_{\hat{\boldsymbol{v}}}\mathbf{P}^{\mathrm{T}}\mathbf{P}\right) = \sum_{i=1}^{\ell} \lambda_i \qquad (28)$$

The cumulative percent of predicted variance by the leading $\ell$ DLVs is given as:

$$\text{PPV}(\ell) = \frac{\sum_{i=1}^{\ell} \lambda_i}{\sum_{i=1}^{p} \lambda_i} \qquad (29)$$

In some embodiments, to determine the number of DLVs, $\ell$ may be chosen so that PPV(*l*) accounts for a predefined percentage of the total predicted variance using all *p* latent variables. In some embodiments, the predefined percentage may define a majority of the total predicted variance. In some embodiments, the number of latent variables is determined such that the target PPV accounts for at least 95% of the total predicted variance. In some embodiments, the number of latent variables is determined such that the target PPV accounts for about 95% of the total predicted variance.

A principal predictor model is generated with the chosen $\ell$ DLVs and, in some embodiments, may be used for process monitoring and/or fault detection.

Since the PPA model aims at maximizing the predicted variance, the cumulative predicted variance by the PPA model is no smaller than that extracted by other latent variable methods with the same number of DLVs.

The DLV prediction $\hat{\boldsymbol{v}}_{\boldsymbol{k}}$ depends on the past $\boldsymbol{v}_k$ as given in equation (6), which further depends on the past $\boldsymbol{y}_k$. The prediction error according to equation (7) is:

$$\boldsymbol{e}_k = \boldsymbol{y}_k - \sum_{j=1}^{s} \mathbf{P}\mathbf{B}_j \mathbf{R}^{\mathrm{T}} \boldsymbol{y}_{k-j}$$

If a fault affects the data, this is expressed as:

$$\boldsymbol{y}_k = \boldsymbol{y}_k^* + \boldsymbol{f}_k$$

where $\boldsymbol{f}_k$ is the actual fault and $\boldsymbol{y}_k^*$ is the fault-free portion of $\boldsymbol{y}_k$. The impact of the fault on the residual is given by equation (30), where $\boldsymbol{e}_k^*$ is the fault-free portion of $\boldsymbol{e}_k$ and $q^{-1}$ is the backward-shift operator.

$$\begin{aligned} \boldsymbol{e}_k &= \boldsymbol{y}_k^* - \sum_{j=1}^{s} \mathbf{P}\mathbf{B}_j \mathbf{R}^{\mathrm{T}} \boldsymbol{y}_{k-j}^* + \boldsymbol{f}_k - \sum_{j=1}^{s} \mathbf{P}\mathbf{B}_j \mathbf{R}^{\mathrm{T}} \boldsymbol{f}_{k-j} \\ &= \boldsymbol{e}_k^* + \left(\mathbf{I} - \sum_{j=1}^{s} \mathbf{P}\mathbf{B}_j \mathbf{R}^{\mathrm{T}} q^{-1}\right)\boldsymbol{f}_k \qquad (30) \end{aligned}$$

It is seen from equation (30) that the impact of the fault on the prediction error is filtered, which can reduce the sensitivity for it to be detected.

To illustrate the reduced sensitivity the following example is provided where $s = 1$, $\mathbf{B}_1 = 0.5$, $\mathbf{P} = [1\ 0]^{\mathrm{T}}$. Equation (30) therefore gives:

$$\begin{bmatrix} e_{1k} \\ e_{2k} \end{bmatrix} = \begin{bmatrix} e_{1k}^* \\ e_{2k}^* \end{bmatrix} + \begin{bmatrix} 1 - 0.5q^{-1} & 0 \\ 0 & 1 \end{bmatrix} \begin{bmatrix} f_{1k} \\ f_{2k} \end{bmatrix}$$

If there is a step fault on $f_{1k}$, the impact on $e_{1k}$ is 0.5 at steady state, while its impact on $y_{1k}$ is 1.0. Therefore, there is the loss of sensitivity on faults if $e_{1k}$ is used for fault detection, even though it removes autocorrelation in $y_{1k}$.

Existing methods to build a PCA model on $\boldsymbol{v}_k$ - $\hat{\boldsymbol{v}}_k$ and another PCA model on $\overline{\varepsilon}_k$ to derive monitoring indices for each of them loses sensitivity to certain types of faults due to the residualization. Another existing method, which uses an extended multiple-step ahead prediction residual, relies on a successful detection by the one-step ahead prediction residual to switch to the extended prediction residual.

In some embodiments, the method of generating a principal predictor model may include monitoring the residuals and the predicted latent variables. In some embodiments, there is provided a method of monitoring using the generated principal predictor model based on equation (3), including the monitoring of the residuals $\{e_k\}$ in equation (3) and the predictable DLV $\{\hat{v}_k\}$.

In some embodiments, the generated principal predictor model may be used to monitor both the prediction residuals and the predictable dynamic latent variables (DLVs). For the prediction residuals, the calculation of the innovations sequence and the use of principal component analysis (PCA) may be used to derive one or more monitoring indices such as the Hotelling's index and the squared prediction error (SPE) index. The Hotelling's index may be used to monitor the scores of the principal components, while the SPE index may be used to monitor the residuals. Additionally, one or more combined monitoring indices is proposed to monitor both the prediction residuals and the predicted DLVs.

In some embodiments, the method 100 may further comprise analyzing the time series data corresponding to a dynamic system using the principal predictor model and detecting an abnormality in the time series data.

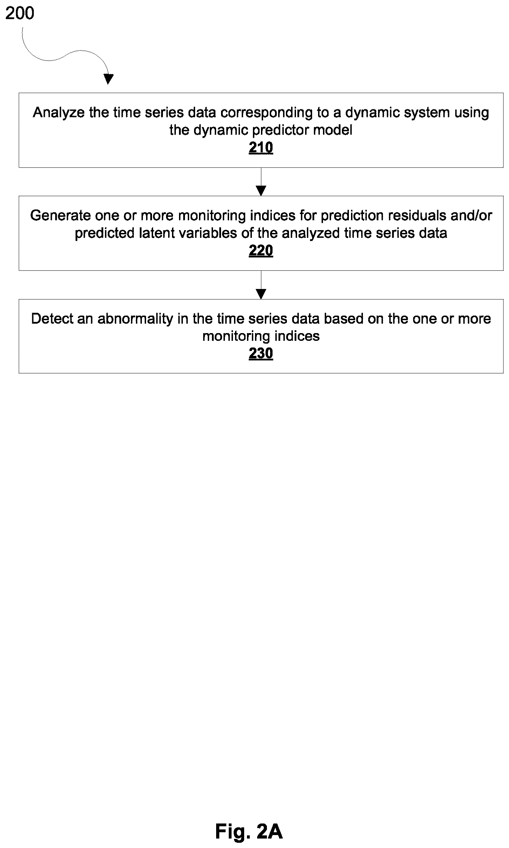

**Figure** 2A is a process flow diagram of a method 200 for detecting an abnormality in a dynamic system, according to some embodiments. In method 200, at 210, multi-dimensional time series data corresponding to a dynamic system is analyzed using a generated principal predictor model. The principal predictor model may be the model output from method 100. At 220, one or more monitoring indices are generated for prediction residuals and/or latent variables of the analyzed time series data. Then, at 230, one or more abnormalities may be detected in the time series data based on the one or more monitoring indices.

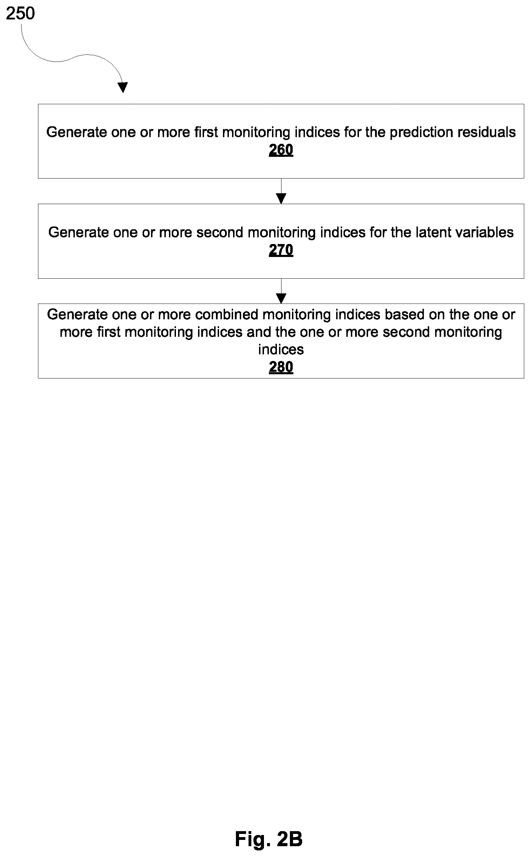

**Figure 2B** is a process flow diagram of a method 250 for generating one or more monitoring indices, according to some embodiments. In method 250, generating one or more monitoring indices includes, at 260, generating one or more first monitoring indices for the prediction residuals. Then, at 270, generating one or more second monitoring indices for the latent variables. Finally, at 280, one or more combined monitoring indices are generated based on the one or more first monitoring indices for the prediction residuals generated at 260 and the one or more second monitoring indices for the latent variables generate at 270. In some embodiments, 260 and 270 of method 250 may be performed sequentially or simultaneously. Whilst the method 250 is shown in Figure 2B as having 260 performed before 270, it will be appreciated that 260 may be performed after, or simultaneously to, 270. The one or more first monitoring indices for the prediction residuals may comprise at least one of a first Hotelling's index defined for the prediction residuals and a square prediction error (SPE) index. In some embodiments, the one or more first monitoring indices for the prediction residuals comprises a combination of the first Hotelling's index and the SPE index. In some embodiments, the one or more second monitoring indices for the latent variables comprises a second Hotelling's index defined for the predicted latent variables. The terms "first," "second," and the like, as used herein, do not denote any order, quantity, or importance, but rather are used to distinguish one element from another.

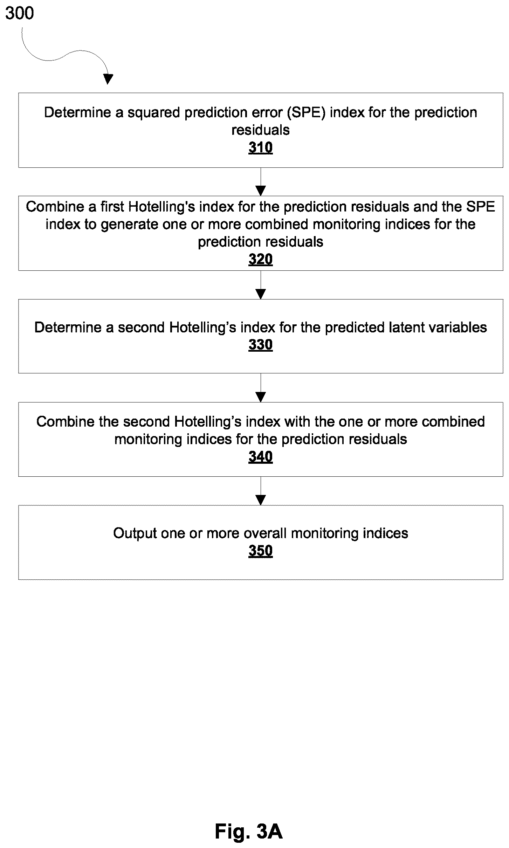

In some embodiments, the method 100 may further comprise generating one or more overall monitoring indices for both the prediction residuals and the predicted latent variables. **Figure** 3A is a process flow diagram of a method 300 for generating one or more overall monitoring indices for the prediction residuals and the predicted latent variables, according to some embodiments. The method 300 includes, at 310, determining a squared prediction error (SPE) index for the prediction residuals. At 320, a first Hotelling's index for the prediction residuals and the SPE index for the prediction residuals are combined to generate one or more combined monitoring indices for the prediction residuals. At 330, a second Hotelling's index for the predicted latent variables is determined. Then, at 340, the second Hotelling's index for the predicted latent variables is combined with the one or more combined monitoring indices for the prediction residuals generated at 320 to generate one or more overall monitoring indices. At 350, the one or more overall monitoring indices are output.

In some embodiments, one or more monitoring indices may be generated as follows. Given normal data and the generated principal predictor model, the innovations sequence $\{e_k\}$ can be calculated to obtain $\mathbf{E}_s = \mathbf{Y}_s - \hat{\mathbf{V}}_s\mathbf{P}^T$ and perform PCA via the EVD shown in equation (31), where $\Lambda_e = \mathrm{diag}(\lambda_{e,1}, \lambda_{e,2}, \cdots, \lambda_{e,p})$ is arranged in descending order and contains the variances of the principal components.

$$\mathbf{E}_s^T\mathbf{E}_s/N = \mathbf{W}_e\Lambda_e\mathbf{W}_e \qquad (31)$$

By selecting the number of principal components, or DLVs, $\ell_e$, for example, to capture 95% of the total variance in $\mathbf{E}_s$, we have the principal component loadings

$$\mathbf{P}_e = \mathbf{W}_e(:,1:\ell_e).$$

The monitoring of $e_k$ can be performed using the principal loadings $\mathbf{P}_e$ to calculate the scores $t_{e,k} = \mathbf{P}_e^{\mathrm{T}} e_k$ and residual $\tilde{e}_k = (\mathbf{I} - \mathbf{P}_e \mathbf{P}_e^{\mathrm{T}}) e_k$ . The Hotelling's index may be defined as:

$$T_e^2 = t_{e,k}^{\mathrm{T}} \Lambda_e^{-1} t_{e,k}$$

where $\Lambda_e = \mathrm{diag}(\lambda_{e,1}, \lambda_{e,2}, \cdots, \lambda_{e,\ell_e})$ is the covariance matrix of $t_{e,k}$. $T_e^2$ approximately follows a $\chi^2$ distribution with $l_e$ degrees of freedom, which has an upper control limit of $\chi_\alpha^2(l_e)$ with $(1 - \alpha)$ as the confidence level.

The residual $\tilde{e}_k$ is monitored by the squared prediction error (SPE) index as follows:

$$Q_e = \tilde{e}_k^{\mathrm{T}} \tilde{e}_k \qquad (32)$$

Assuming $e_k$ is normally distributed with $\lambda_{e,i}$ as the variance of the $i^{th}$ residual component, $g_e^{-1} Q_e$ approximately follows a $\chi^2(h_e)$ distribution with an upper control limit of $\chi_\alpha^2(h_e)$ , where

$$g_e = \frac{\sum_{i=\ell_e+1}^{p} \lambda_{e,i}^2}{\sum_{i=\ell_e+1}^{p} \lambda_{e,i}}$$

$$h_e = \frac{(\sum_{i=\ell_e+1}^{p} \lambda_{e,i})^2}{\sum_{i=\ell_e+1}^{p} \lambda_{e,i}^2}$$

In some embodiments, one or more combined monitoring indices may be generated. For example, the combined index may include a combined index of $T_e^2$ and $Q_e$, rather than monitoring them separately. Since both $T_e^2 \sim \chi^2(\ell_e)$ and $g_e^{-1} Q_e \sim \chi^2(h_e)$ follow $\chi^2$ distributions and are independent, the combined index provided in equation (33) has a control limit $\chi_\alpha^2(\ell_e + h_e)$ with confidence level $(1 - \alpha)$.

$$\phi_e = T_e^2 + g_e^{-1} Q_e \sim \chi^2(\ell_e + h_e) \qquad (33)$$

From equation (3) it can be seen that the DLV prediction $\{\hat{v}_k\}$ may also be monitored. If a fault happens in past data that is used to predict $\{\hat{v}_k\}$, it can enhance the detection of such a fault.

The monitoring of $\{\hat{v}_k\}$ can be carried out in accordance with Theorem 1. Since the number of DLVs $\ell$ is chosen to include significantly predictable ones, the covariance of the predicted DLVs $\hat{\Sigma}_{\hat{v}} = \mathrm{diag}(\lambda_1, \lambda_2, \cdots, \lambda_\ell)$ is well conditioned. Therefore, the monitoring of predicted DLVs can be implemented with the Hotelling's index of equation (34), which has a control limit $\chi_\alpha^2(\ell)$ with confidence level $(1 - \alpha)$.

$$T_{\hat{v}}^2 = \hat{v}_k^{\mathrm{T}} \hat{\Sigma}_{\hat{v}}^{-1} \hat{v}_k \sim \chi^2(\ell) \qquad (34)$$

In some embodiments, one or more overall monitoring indices may be implemented for both the prediction residuals and the predicted DLVs. Using the fact that the predicted DLVs $\{\hat{v}_k\}$ are uncorrelated to their residuals, one or more overall monitoring indices may be calculated by combining $T_{\hat{v}}^2$ with $\phi_e$ as shown in equation (35), which has a control

limit $\chi_\alpha^2(\ell + \ell_e + h_e)$ with confidence level $(1 - \alpha)$.

$$\phi_o = T_{\hat{v}}^2 + \phi_e \sim \chi^2(\ell + \ell_e + h_e) \tag{35}$$

The method of generating a principal predictor model described herein significantly enhances the monitoring indices by capturing the most predictable variances in high-dimensional time series data. The iterative process that continuously refines the model parameters enables the principal predictor model to adapt to changes in the data. By maximizing the covariance between the latent vector and its prediction, the method provides more accurate and reliable monitoring indices. These enhanced indices may lead to improved process monitoring and fault detection, as they can more effectively identify anomalies and deviations in complex time series data, such as that provided by industrial and operational dynamic systems.

In some embodiments, the PPA method and PPA models disclosed herein may further implement a fault reconstruction process to improve fault diagnosis during fault monitoring. The fault reconstruction process estimates a fault matrix from the faulty data and reconstructs the normal operation data as if there were no disturbances. This fault reconstruction process may comprise identifying the fault's impact on the system and isolating the fault from the normal operational data. As such, the reconstructed data may represent the system's behavior under substantially normal operating conditions. That is, the system's behaviour when it is free from the influence of the identified fault. The fault reconstruction advantageously provides accurate fault diagnosis by understanding the system's true performance without the distortion caused by faults. The reconstruction process enables the methods and system to pinpoint the nature and location of the fault, thereby facilitating effective corrective actions.

The fault reconstruction process extends the traditional PCA-based reconstruction method to Principal Predictor Analysis by incorporating SVD on the prediction residuals to estimate the fault directions. In the PPA approach, the prediction residuals, which represent

the difference between the actual and predicted values, are decomposed using SVD. This decomposition helps in identifying the directions in which the faults are most prominent. It is therefore possible to understand how the faults affect the system and to isolate their impact by analyzing these fault directions.

In some embodiments, $\{y_k\}$ is fault-free up to time $k$ and fault $i$ affects the subsequent data $\{y_{k+j}\}_{j=1}^m$ as shown in equation (36), where $y_{k+j}^*$ is the fault-free portion of the data and unknown after the fault happened.

$$y_{k+j} = y_{k+j}^* + \Xi_i f_{k+j} \tag{36}$$

To estimate the fault matrix $\Xi_i \in \mathfrak{R}^{p \times \ell}$ from the faulty data, the PCA-based reconstruction can then be extended. Equation (37) shows the prediction residuals $\hat{e}_{k+j|k}$ at time $k+j$ given the data up to time $k$. Here, $y_{k+j}$ is the observed data at time $k+j$, $\hat{P}$ is the loadings matrix, and $\hat{v}_{k+j|k}$ is the $j$-steps ahead prediction of the DLVs which is fault-free. Essentially, equation (37) calculates the difference between the observed data and the predicted data, providing the residuals that indicate the presence of faults.

$$\hat{e}_{k+j|k} = y_{k+j} - \hat{P}\hat{v}_{k+j|k} \tag{37}$$

$$\hat{e}_{k+j|k} = \hat{e}_{k+j|k}^* + \Xi_i f_{k+j} \tag{38}$$

Equation (38) decomposes the prediction residuals $\hat{e}_{k+j|k}$ into two components: the fault-free residuals $\hat{e}_{k+j|k}^*$ (where $\hat{e}_{k+j|k}^* = y_{k+j}^* - \hat{P}\hat{v}_{k+j|k}$ ) and the fault effects $\Xi_i f_{k+j}$. Here, $\Xi_i f_{k+j}$ represents the residuals that would be present if there were no faults. $\Xi_i$ is a fault direction matrix, representing the fault directions. The fault direction matrix is obtained by performing SVD on the prediction residuals matrix $\mathbf{E}_m$, and the columns of the fault direction matrix are the left singular vectors corresponding to the largest singular values, representing the directions in which the faults are most prominent. $f_{k+j}$ is the fault magnitude at time $k+j$. Equation (38) demonstrates how the observed residuals are influenced by the fault, allowing for the estimation of the fault's impact on the system.

The prediction residuals $\mathbf{E}_m$ are then decomposed using Equation (39). In equation (39), $\mathbf{E}_m$ is a matrix which represents the prediction residuals for the period affected by the fault, and is constructed from the columns of $\hat{e}_{k+j|k}$ which are the prediction residuals at time $k+j$ given the data up to time $k$. $\mathbf{E}_m$ may be denoted as $\mathbf{E}_m = \begin{bmatrix} \hat{e}_{k+1|k} & \cdots & \hat{e}_{k+m|k} \end{bmatrix}$. $\mathbf{E}_m^*$ is a matrix which represents the fault-free portion of the prediction residuals, and is constructed from the columns of $\hat{e}_{k+j|k}^*$ which are the prediction residuals that would be present if there were no faults. $\mathbf{E}_m^*$ may be denoted as $\mathbf{E}_m^* = \begin{bmatrix} \hat{e}_{k+1|k}^* & \cdots & \hat{e}_{k+m|k}^* \end{bmatrix}$. $\mathbf{F}_m$ is a matrix which represents the fault magnitudes for the period affected by the fault, and is constructed from the columns of $f_{k+j}$. $\mathbf{F}_m$ may be denoted as $\mathbf{F}_m = [f_{k+j} \cdots f_{k+j}]$.

$$\mathbf{E}_m = \mathbf{E}_m^* + \Xi_i \mathbf{F}_m \tag{39}$$

Equation (39) therefore decomposes the prediction residuals $\mathbf{E}_m$ into two components: the fault free residuals $\mathbf{E}_m^*$ and the fault effects $\Xi_i \mathbf{F}_m$. When the fault magnitude $f_{k+j}$ becomes significant, the normal prediction residuals $\mathbf{E}_m^*$ are relatively insignificant, therefore, $\Xi_i$ and $\mathbf{E}_m$ approximately share the column space. By performing SVD on $\mathbf{E}_m = \mathbf{U}_m \mathbf{D}_m \mathbf{V}_m^{\mathrm{T}}$, the estimated fault directions may be set as $\Xi_i = \mathbf{U}_m(:,1:\ell_i)$.

In some embodiments, $\ell_i$ is set incrementally so that the residuals $\mathbf{E}_m$ in equation (39) may be reconstructed within its normal control limit. $\mathbf{E}_m^*$ may be denoted as equation (40).

$$\mathbf{E}_m^r = \mathbf{E}_m - \Xi_i \mathbf{F}_m^r \tag{40}$$

In some embodiments, the reconstruction minimizes $\|\mathbf{E}_m^r\|_F^2$, which leads to equations (41) and (42).

$$\mathbf{F}_m^r = \Xi_i^{\mathrm{T}} \mathbf{E}_m \tag{41}$$

$$\mathbf{E}_m^r = \left(\mathbf{I} - \Xi_i \Xi_i^{\mathrm{T}}\right) \mathbf{E}_m \tag{42}$$

$\mathbf{E}_m^r$ is a matrix which represents the reconstructed fault free residuals for the period affected by the fault. As shown in equation (40), $\mathbf{E}_m^r$ is the result of subtracting the estimated fault effects from the observed residuals. $\mathbf{F}_m^r$ is a matrix which represents the reconstructed fault magnitudes for the period affected by the fault, and is calculated according to equation (41), which projects the residuals onto the fault directions to estimate the fault magnitudes.

In some embodiments, denoting $\tilde{e}_{k+j|k}^r$ as the $j^{\text{th}}$ column of $\mathbf{E}_m^r$ to calculate $\tilde{e}_{k+j|k}^r$ using $\tilde{e}_{k+j|k}^r = (\mathbf{I} - \mathbf{P}_e \mathbf{P}_e^{\mathrm{T}})\hat{e}_{k+j|k}^r$ and $\phi_e^r(k+j)$ using equation (33) means that $\phi_e^r(k+j)$ can be brought back to the normal control limit by increasing $\ell_i$. In some embodiments, the smallest $\ell_i$ that brings $\phi_e^r(k+j)$ back to the normal control limit may be determined. This is the reconstruction based approach to determining $\ell_i$.

Reconstruction-based contributions (RBC) are then calculated to quantify the contributions of each variable to the fault. In some embodiments, this involves using the estimated fault directions obtained from the SVD of the prediction residuals. The RBC values are derived by projecting the residuals onto these fault directions, where the RBC values indicate the extent to which each variable contributes to the fault.

After the effective $\ell_i$ is determined, the columns of $\Xi_i = \mathbf{U}_m(:,1:\ell_i)$ may be used to define the RBC of the fault as equation (44) (also referred to as the RBC equation). $\mathbf{D}_m$ is the diagonal matrix of singular values obtained from the SVD of $\mathbf{E}_m$. The singular values represent the magnitude of the fault in each direction. The notation $\mathbf{D}_m^2(1:\ell_i, 1:\ell_i)$ indicates taking the square of the singular values corresponding to the first $\ell_i$ fault directions. $\Xi_i^{\mathrm{T}}$ is used to project the fault contributions back onto the original variable space. The RBC equation calculates the contributions of each variable to the fault by projecting the fault directions onto the original variable space and scaling them by the magnitude of the fault in each

direction.

$$\text{RBC} = \text{diag}\{\mathbf{\Xi}_i \mathbf{D}_m^2(1\!:\!\ell_i, 1\!:\!\ell_i)\mathbf{\Xi}_i^{\text{T}}\} \tag{44}$$

These contributions advantageously assist in identifying the specific variables that are responsible for a fault within a dynamic system, allowing the cause of the fault to be targeted more effectively.

In some embodiments, the fault reconstruction process may comprise generating the reconstructed data by subtracting the estimated fault effects from the observed data. In some embodiments, generating the reconstructed data may comprise using the fault directions and the RBC values to estimate the fault's impact on the system. Once the fault effects are estimated, they may then be subtracted from the observed data to generate the reconstructed data that represents the system's normal, or standard, operation. This reconstructed data may be substantially free from the distortions caused by the fault, thereby providing a clear view of the dynamic system's normal performance.

The methods and systems described herein offer several advantages for dynamic process monitoring and fault detection. The methods and systems capture the most predictable variances in a dynamic system, ensuring that the most significant variations are monitored. This leads to more accurate and reliable predictions. Further, the method combines the strengths of both dynamic latent variable models and principal component analysis, providing a comprehensive monitoring framework that can handle both predictable and unpredictable variations. Additionally, the methods described herein are designed to effectively handle noise and high-dimensional data.

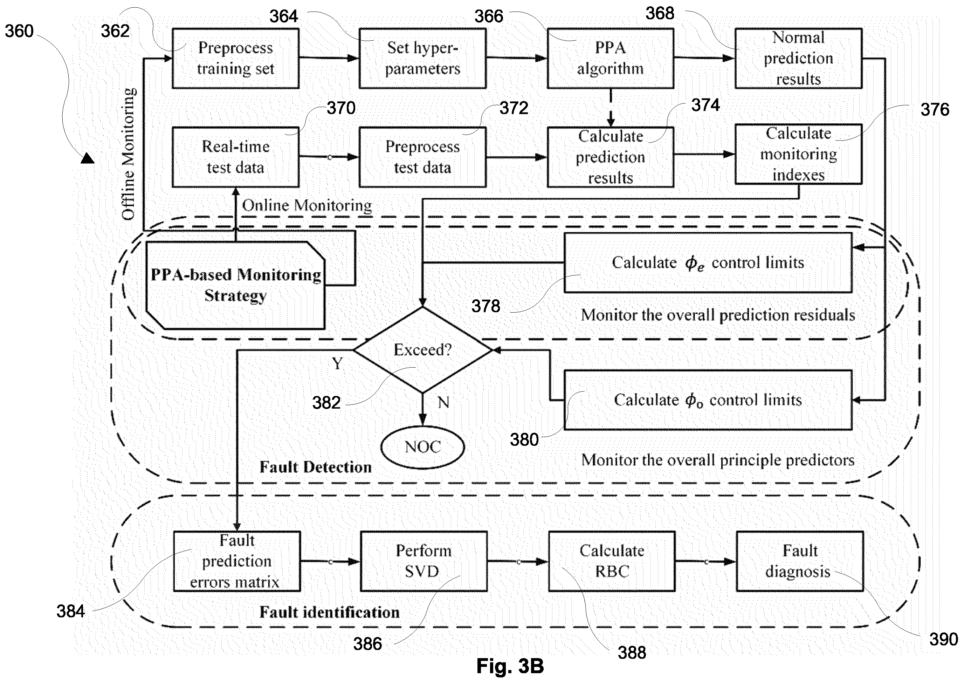

**Figure 3B** is a process flow diagram of a PPA-based modelling and monitoring method 360, according to some embodiments. The method 360 may comprise using the generated principal predictor model, or PPA model, for offline monitoring and/or online monitoring.

In the offline monitoring phase, the principal predictor model is trained using historical data to establish a baseline of normal operation. At 362, the training data is pre-processed. This may comprise handling missing values by using linear interpolations and detecting outliers using an initial PCA model. Outliers that exceed the control limit with a high confidence level are treated to maintain the continuity of the time sequences. At 364, once the training data has been pre-processed at 362, the hyperparameters for the PPA model are set. In some embodiments, setting the hyperparameters for the PPA model may comprise selecting the number of DLVs to capture the most predictable variations in the data. For example, the number of DLVs may be chosen to account for a high proportion of the total predictable variances, ensuring that the model is neither over-parameterized nor under-parameterized. In some embodiments, setting the hyperparameters for the PPA model may comprise the performing all or part of method 100.

At 366, with the hyperparameters set, the PPA model is applied to the pre-processed training data to train the PPA model. At 368, the trained PPA model is then used to generate normal prediction results. In some embodiments, generating normal prediction results may comprise calculating the prediction residuals and principal predictors for the training data. The prediction residuals represent the differences between the actual and predicted values, while the principal predictors capture the predictable variations in the data. The normal prediction results establish a baseline of normal operation for the system.

In the online monitoring phase, real-time test data is collected from the dynamic system. The real-time data may be continuously gathered from sensors and other data sources to provide up-to-date information about the dynamic system's current state.

At 370, real-time test data is collected from the dynamic system. At 372, similar to the preprocessing of the training set, the real-time test data may also be pre-processed. Preprocessing the real-time data may comprise handling any missing values and detecting outliers. In some embodiments, linear interpolations may be used to replace missing values, and/or an initial PCA model may be built to detect and treat outliers. At 374, once the real-time test data is pre-processed at 372, the trained PPA model is applied to calculate the prediction results. In some embodiments, this may comprise using the PPA model to generate prediction residuals and principal predictors for the incoming data. The results may be used to compare the real-time data with the established baseline of normal operation. In some embodiments, the PPA model may be configured to perform all or part of methods 200, 250, and/or 300 as described herein. At 376, the monitoring indexes are calculated based on the prediction results. This involves developing a global predictive monitoring index that accounts for variations in the prediction residuals and the principal predictors.

At 378 and 380, the control limits for the monitoring indexes are calculated. In some embodiments, calculating the control limits for the monitoring indexes may comprise developing a global predictive monitoring index that accounts for variations in the prediction residuals and the principal predictors. The control limits may be set based on the normal prediction results obtained at 368, providing thresholds for detecting potential faults in the system. If the monitoring indexes exceed these control limits during online monitoring, it indicates a potential fault that requires further investigation. In some embodiments, the monitoring indexes may be continuously calculated and compared to control limits established during the offline monitoring phase.

At 382, it is determined whether the monitoring indexes exceed the control limits. If the monitoring indexes exceed the control limits, this indicates a potential fault in the system, and the method 360 proceeds to a fault diagnosis phase.

Once a fault is detected, the fault diagnosis phase is initiated. At 384, the prediction error matrix is calculated. In some embodiments, the prediction error matrix may be calculated by subtracting the predicted values from the actual values. At 386, SVD is then performed on the prediction error matrix. Then, at 388, the reconstruction-based contributions, or RBCs, are calculated to identify the contributions of each variable to the detected fault. At 390, the fault is diagnosed. In some embodiments, diagnosing the fault may comprise using the RBCs to identify the faulty variables. In some embodiments, diagnosing the fault may comprise analyzing the RBC matrix to determine which variables have the highest contribution to the fault.

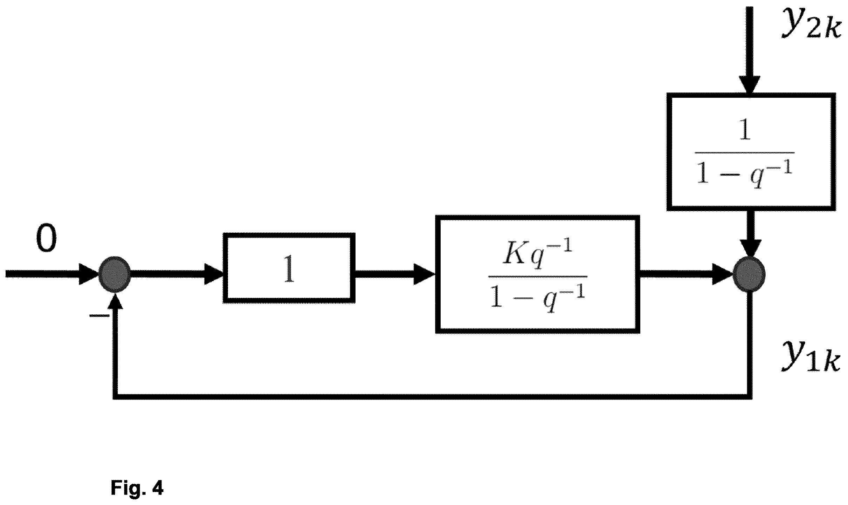

**Figure** 4 is a diagram of a dynamic system example with a process fault, according to some embodiments. The process disturbance in the dynamic process example is measured as $y_{2k} \sim \mathcal{N}(0,1)$. The measured control variable is:

$$y_{1k} = \frac{1}{1+\frac{Kq^{-1}}{1-q^{-1}}} \frac{1}{1-q^{-1}} y_{2k} = \frac{1}{1-(1-K)q^{-1}} y_{2k}$$

The variance of $y_{1k}$ is then calculated as $\frac{1}{1-(1-K)^2}$.

The measured time series $y_k = [y_{1k} \, y_{2k}]^T$ is analyzed with the PPA model as described herein. The normal process gain is assumed to be $K = 0.5$ and generates 100 samples. A process gain fault happens with $K = 1.5$ and 100 fault samples are generated to test the effectiveness of the PPA algorithm, as well as existing DiCCA and PCA algorithms for comparison.

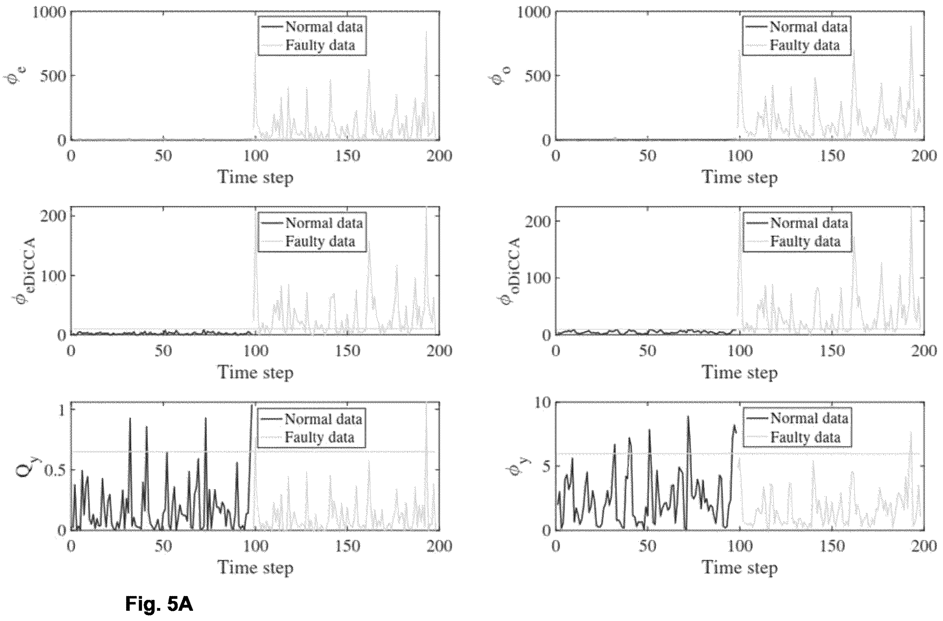

**Figure 5A** is a comparison of monitoring charts of $\phi_e$ and $\phi_o$ using DLVs compared to DiCCA and PCA based monitoring for the example system in Figure 4. Figure 5A depicts the fault monitoring results of the example with the three methods. It can be seen that both LaVAR-MPV and DiCCA are able to effectively detect the fault, but PCA (which focuses on variance only) fails completely at detecting the fault. The LaVAR-MPV model shows the highest fault detection rate of 87% and 98% for $\phi_e$ and $\phi_o$, respectively, $\phi_{eDiCCA}$ and $\phi_{oDiCCA}$ for DiCCA is 70% and 69%, while $Q_y$ and $\phi_y$ for PCA is only 2% and 1%. Since the process gain fault from 0.5 to 1.5 changes the dynamics of the system but does not change the variance of the measured data, PCA fails completely.

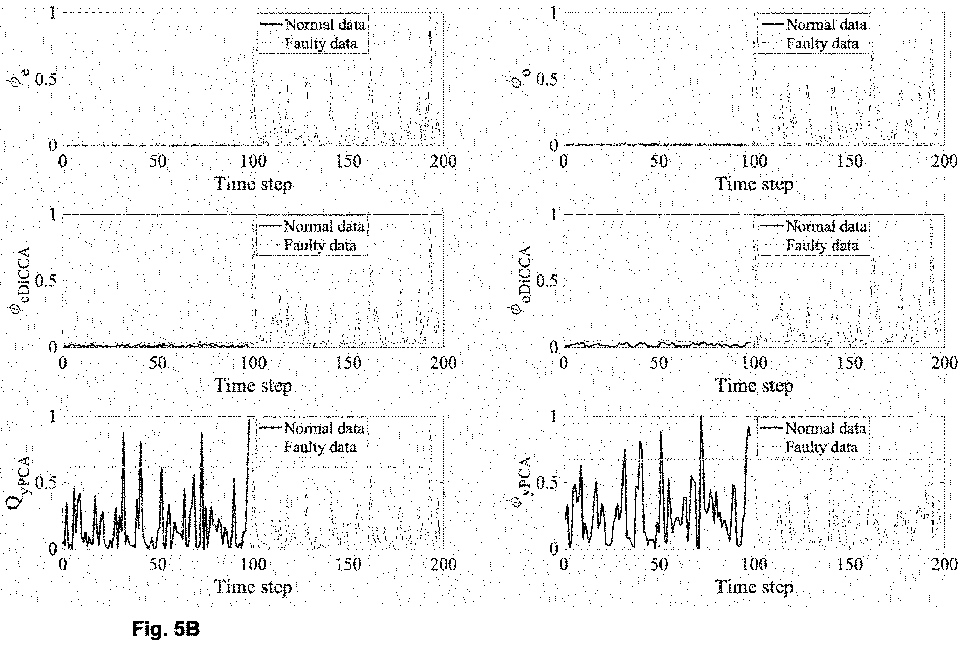

**Figure 5B** is another illustration of the comparison of monitoring charts of $\phi_e$ and $\phi_o$ using DLVs compared to DiCCA and PCA based monitoring for the example system in Figure 5A. Figures 5A and 5B present the same experimental results, with Figure 5B displaying the results in a logarithmic form with base 10. In Figure 5B, $Q_{yPCA}$ is equivalent to $Q_y$ in Figure 5A, and $\phi_{yPCA}$ in Figure 5B is equivalent to $\phi_y$ in Figure 5A.

In another example, a simulated Tennessee Eastman Process (TEP) data set is used to test the performance of the LaVAR-MPV model algorithm over the other two algorithms tested above, that is, DiCCA and PCA. PCA is directly used to deal with the original data. Six modes of the TEP data set are provided, for which there are 28 fault types. In this example, IDV2, IDV11 and IDV13 are selected to demonstrate the effectiveness of three algorithms for monitoring a step fault, a random fault and a slow drift change fault, respectively.

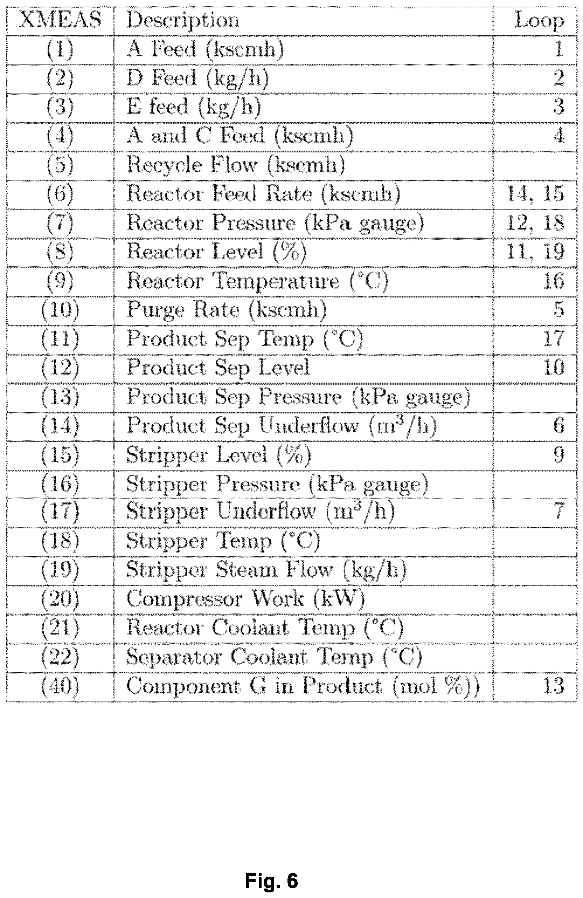

23 variables, including XMEAS(1)~(22) and XMEAS(40), are considered, which are involved in 19 loops of decentralized control strategy. **Figure 6** is a table showing the studied 23 measured variables in 19 decentralized control loops. Before a LaVAR-MPV model is built for process monitoring, the number of DLVs $\ell$ needs to be determined. In this example, PPV($\ell$) is calculated for DLVs-based models to select $\ell$. Using equation (29), $\ell$ is chosen such that $\ell = 8$ to account for at least 95% of the total predicted variance using all possible 23 latent variables. For comparison, $\ell$ is chosen such that $\ell = 6$ for a DiCCA model to extract the most representative dynamics from the multi-dimensional time series data.

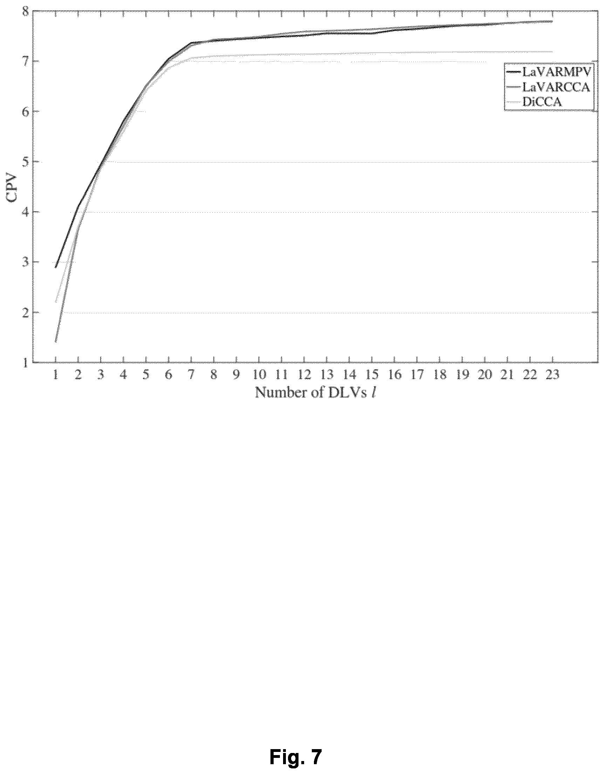

**Figure 7** is a graph showing the CPVs($\ell$) for LaVAR-MPV, LaVAR-CCA and DiCCA. Since the CPVs are calculated from the training data, more DLVs tend to capture higher CPVs. However, as the number of DLVs approaches the maximum, DiCCA captures lower CPVs than the other two methods, as can be seen in Figure 7, which is attributed to the univariate DLVs models employed in DiCCA. It is also seen that CPVs for LaVAR-MPV model are generally larger than those of the LaVAR-CCA model. This is due to the objective of the LaVAR-MPV model which obtains higher maximum predicted variances.

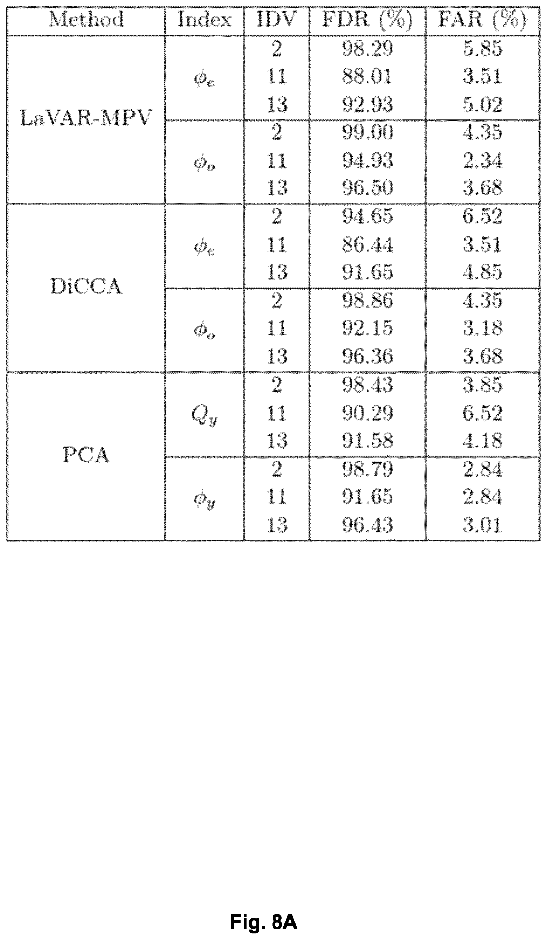

**Figure 8A** shows the fault detection rate (FDR) and false alarm rate (FAR) using monitoring indices $\phi_e$, $\phi_o$, $\phi_{eDiCCA}$, $\phi_{oDiCCA}$, $Q_y$ and $\phi_y$ for LaVAR-MPV model and the other two methods, DiCCA and PCA. $\phi_{eDiCCA}$ and $\phi_{oDiCCA}$ are monitoring indices $\phi_e$ and $\phi_o$ of the DiCCA model. $Q_y$ is the squared prediction error (SPE) of PCA on the residuals, and $\phi_y$ is an overall measure for the PCA method. Type-I error for building three models from a normal data set may be set to 5% with an $\alpha$ value of 0.05. Figure 8A indicates that $\phi_o$ ($\phi_y$ for PCA) shows a superior performance than $\phi_e$ ($Q_y$ for PCA) for monitoring three fault types both in terms of FDR and FAR for the three models. Considering $\phi_e$ ($Q_y$ for PCA) for monitoring IDV2 and IDV11, $Q_y$ shows a higher FDR than the LaVAR-MPV and DiCCA models, though the FAR for monitoring IDV11 is much higher than the other two methods. $\phi_e$ performs better than $\phi_{eDiCCA}$. For IDV13, the FDR of LaVAR-MPV is the highest among the three methods, and $Q_y$ shows an inferior performance than other two methods, with the smallest FAR. When $\phi_o$ ($\phi_y$ for PCA) is used, the LaVAR-MPV model is still the best regarding the FDR for monitoring three fault types. DiCCA shows a generally better FDR than PCA. Therefore, it is shown that $\phi_o$ of the LaVAR-MPV model is a good choice for monitoring these three fault types with the highest FDR and the lowest FAR since $\phi_o$ is a global index for latent dynamics in complex multi-dimensional time series data.

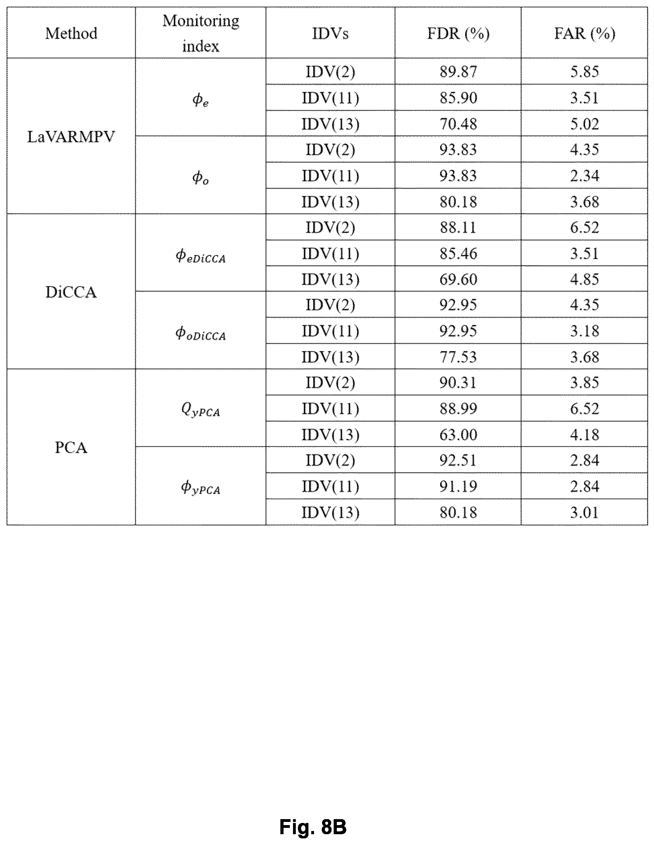

**Figure 8B** shows another illustration of the fault detection rate (FDR) and false alarm rate (FAR) using monitoring indices $\phi_e$, $\phi_o$, $\phi_{eDiCCA}$, $\phi_{oDiCCA}$, $Q_{yPCA}$ (or $Q_y$) and $\Phi_{yPCA}$ (or $\phi_y$) for the PPA model (or the LaVAR-MPV model) and the other two methods, DiCCA and PCA. The illustration showed that similar conclusions are drawn from Figure 8B as those from Figure 8A.

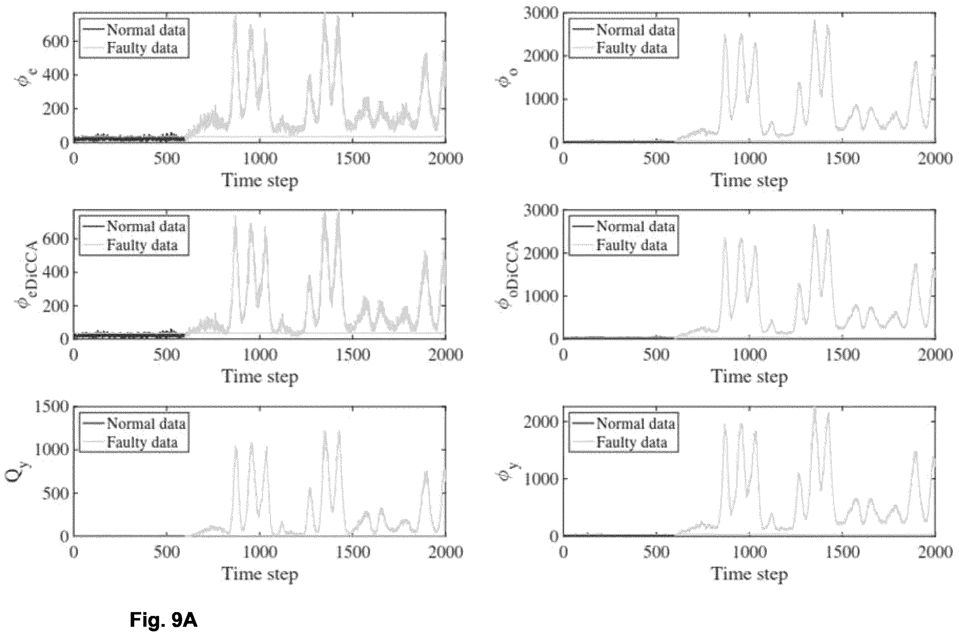

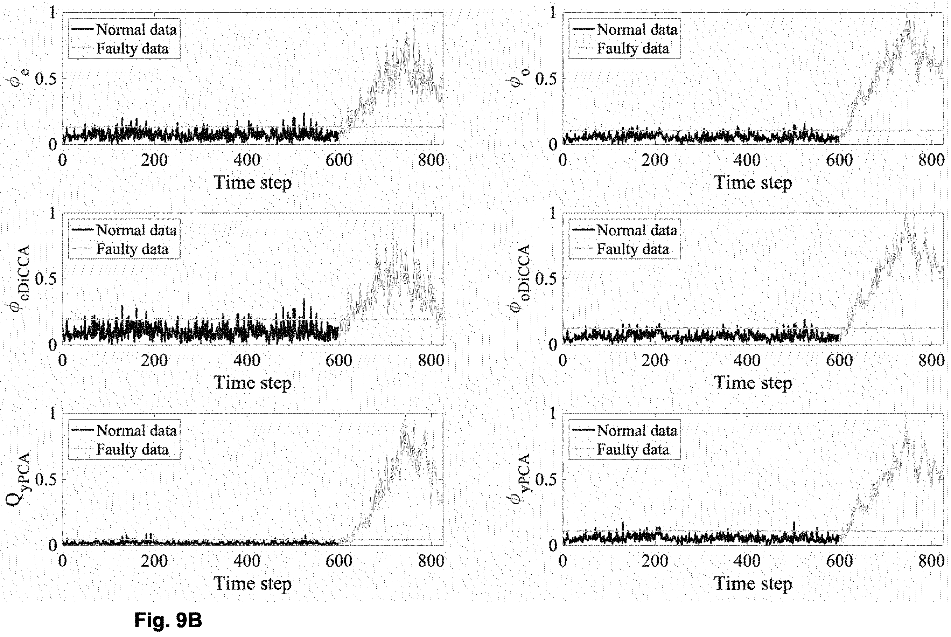

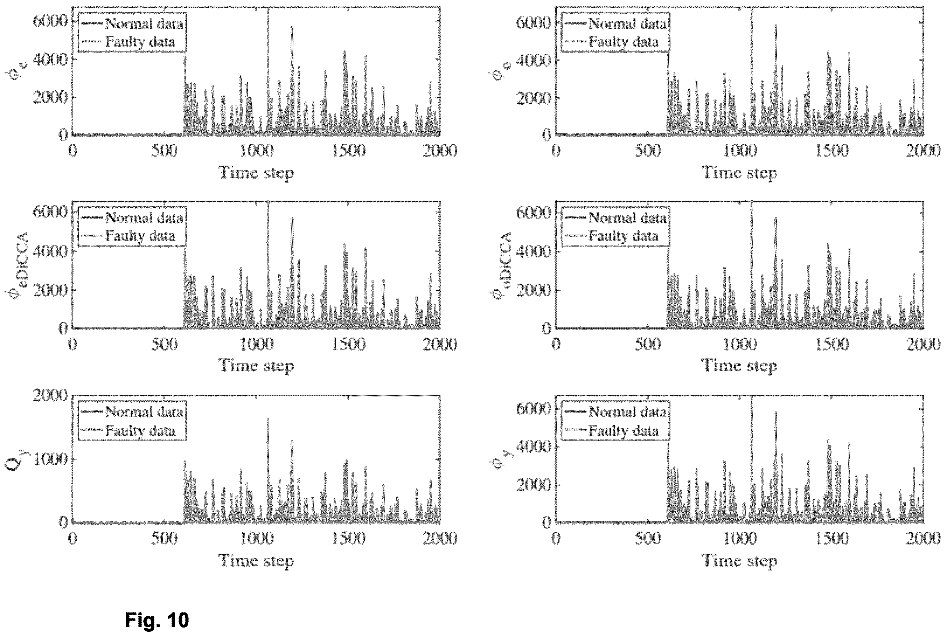

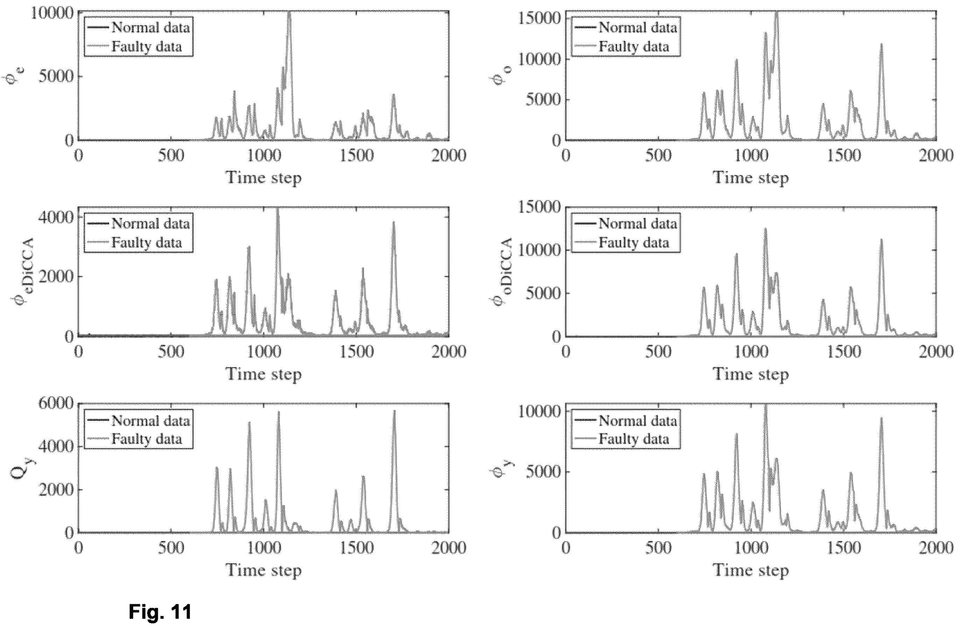

**Figure 9A** is a comparison of the monitoring charts of $\phi_e$ and $\phi_o$ using 8 DLVs compared to DiCCA and PCA based monitoring for IDV2. Figure 9B is another illustration of the comparison of the monitoring charts of $\phi_e$ and $\phi_o$ using 8 DLVs compared to DiCCA and PCA based monitoring for IDV2 in Figure 9A. Fig. 9B presented the results after taking the logarithm with base 10 and plotted the first about 800 experimental results in Figure 9A. **Figure 10** is a comparison of the monitoring charts of $\phi_e$ and $\phi_o$ using 8 DLVs compared to DiCCA and PCA based monitoring for IDV11. **Figure 11** is a comparison of monitoring charts $\phi_e$ and $\phi_o$ using 8 DLVs compared to DiCCA and PCA based monitoring for IDV13. It is evident that each of these three methods is capable of distinguishing the normal data from the faulty data of different characteristics, since the effect of the faults in the simulated data is so dramatic comparing to normal circumstances. However, it is noted that minor differences in detection effectiveness are shown in Figures 8A and 8B.

The "Dow Challenge dataset", provided by Dow Chemical, was used as a practical test to evaluate the effectiveness of the PPA methods described herein. The dataset, which may also be referred to as the test dataset, encompasses data from a purification process involving three distillation columns, which tend to accumulate impurities due to the accelerated aging of the catalyst. The primary objective is to predict the impurity levels in the process. Two distinct datasets were provided for this test. The first dataset spans from December 2015 to January 2017, and the second dataset covers the period from February 2017 to October 2017. These datasets exhibit changes in operation modes and anomalies, making them suitable for testing the PPA method.

The primary column in the dataset is selected for monitoring and diagnosing faults, utilizing 15 key process variables. These variables include Reflux Flow, Tails Flow, Feed Flow from Column 2, Make Flow, Base Level, Bed1 DP, Bed2 DP, Bed3 DP, Bed4 DP, Base Pressure, Head Pressure, Bed 4 Temperature, Bed 3 Temperature, Bed 2 Temperature, and Bed 1 Temperature. Four additional variables with negligible variation are excluded from the analysis. The data period from January 2016 to May 2016 involves few anomalies and is used to build models for monitoring purposes. The subsequent 15 days are used for the monitoring and diagnosis of anomalies and disturbances.

The training data in the test dataset, although considered to be from normal operations, contains missing values and outliers that may be preprocessed prior to building the normal models. Accordingly, as part of testing the proposed PPA algorithm for the test dataset, the samples that were missing or outlying were reconstructed or regenerated using a dynamic model in order to maintain the integrity of the time sequences. The following steps were adopted to preprocess and curate a refined training set for subsequent modelling:

- Linear Interpolations: Missing values that have valid values before and after were replaced using linear interpolations.

Initial PCA Model: An initial PCA model was built to generate the Q index for detecting outliers that exceed the control limit with super-high confidence (99.9%). Sporadically high outliers detected were further treated using the same procedure as in the previous step.

PPA Model: A PPA model is built on the PCA pre-processed training data to detect additional outliers using the $\phi_e$ monitoring index. This step helps distinguish between normal dynamic variations and anomalous operations. For instance, periods of high Q values detected by PCA that are caused by normal dynamics are identified, while periods caused by anomalous operations are further analyzed.

The PPA model's effectiveness in preprocessing is demonstrated by comparing the predicted and actual values of key variables, such as "Bed 4 DP." Significant deviations in the actual values from the predicted values indicate anomalies, which are then corrected using the predicted values to build a refined PPA model for monitoring and diagnosis. The resulting $\phi_e$ monitoring index of the refined PPA model was determined to be normal, except for some sporadic outlying values, leading to an acceptable Type-I error rate.

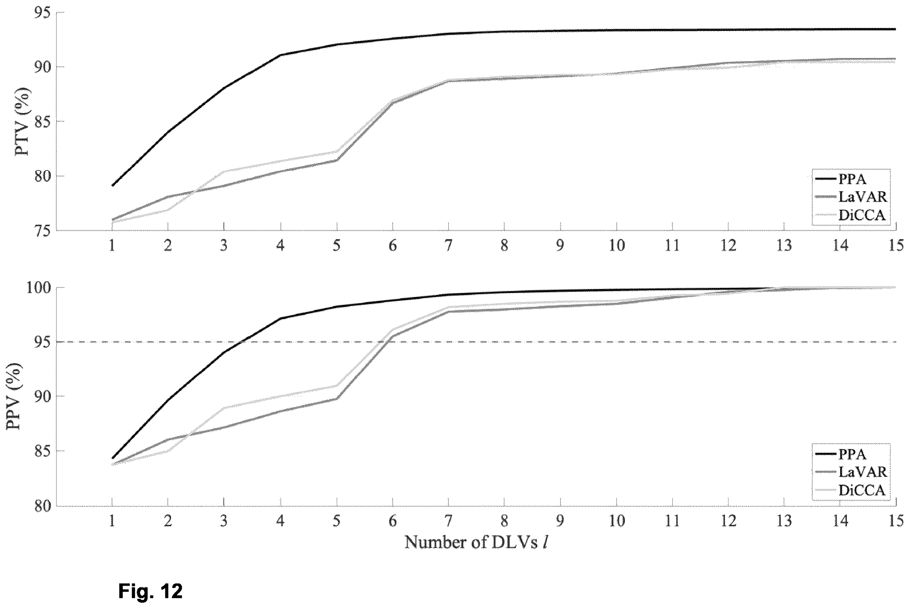

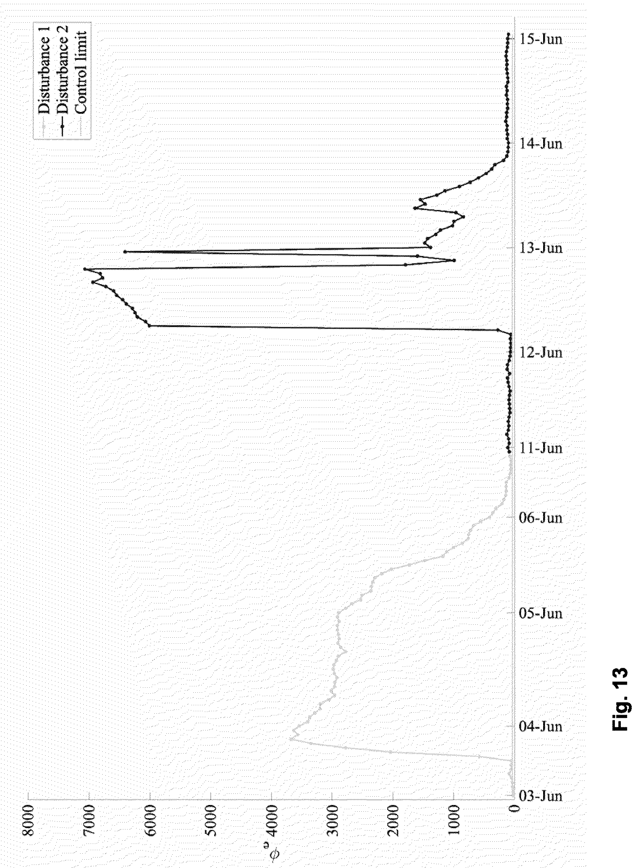

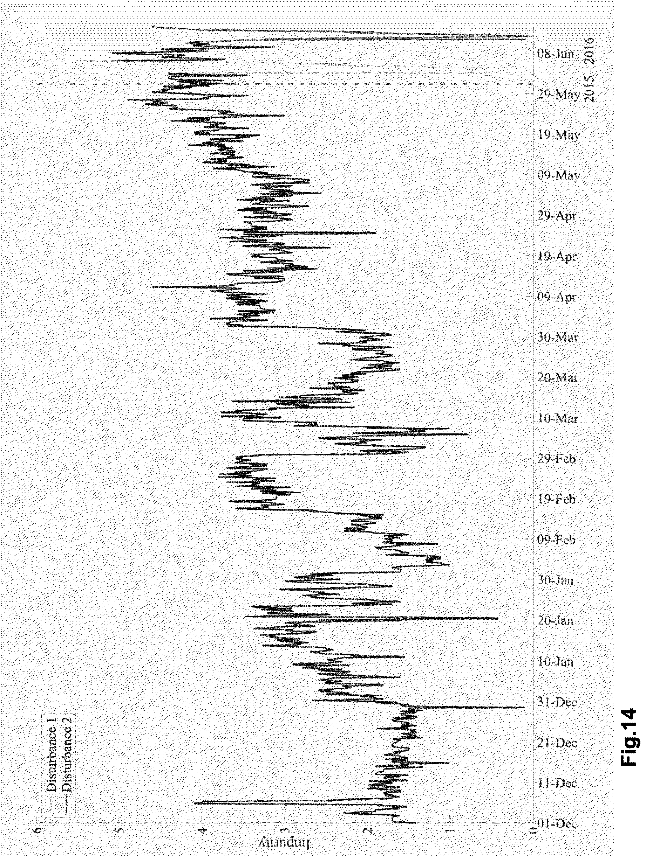

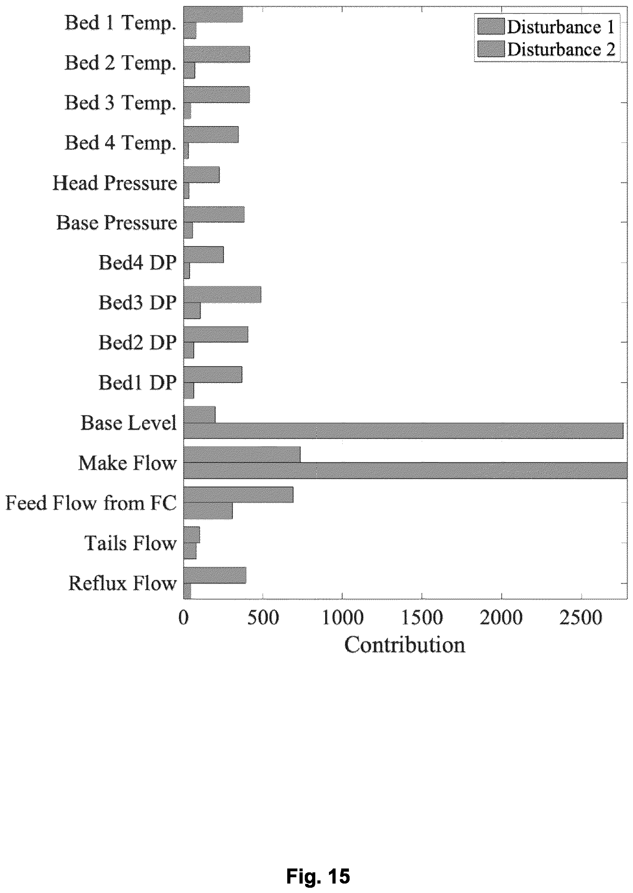

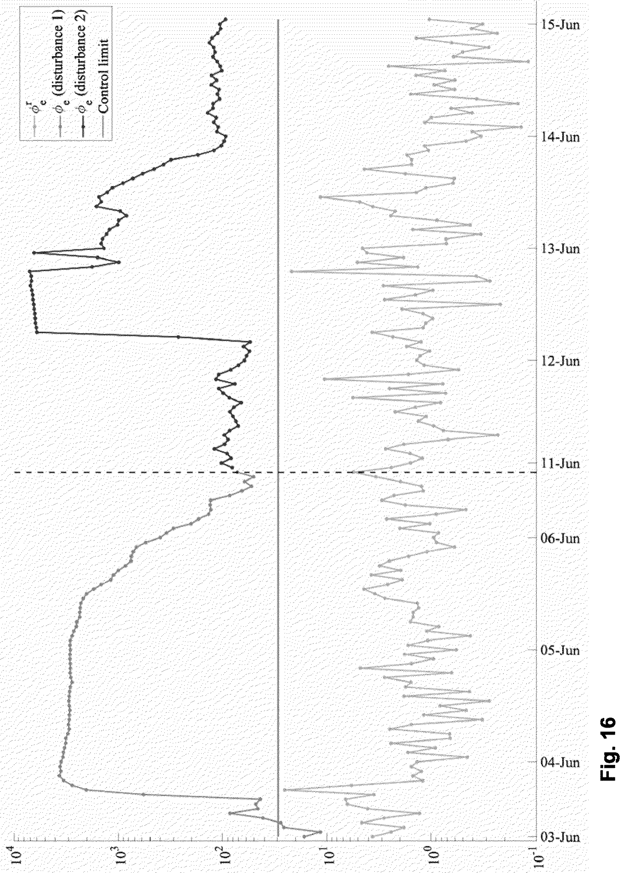

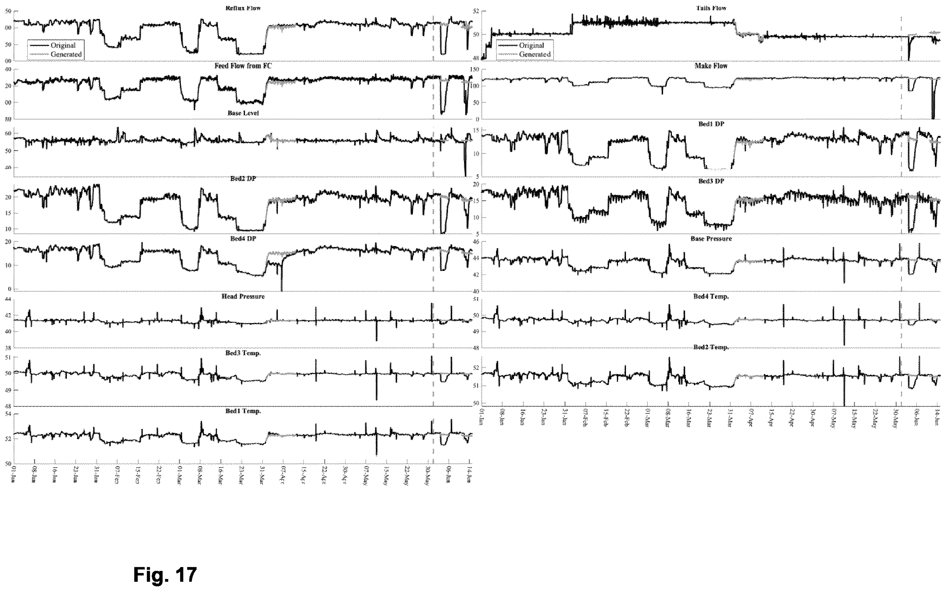

**Figure 12** is a graph showing PTV (top graph) and PPV (bottom graph) for PPA, LaVAR and DiCCA models of the test dataset. **Figure 13** is a graph showing the monitoring index $\phi_e$ for Disturbances 1 and 2 by the PPA model. **Figure 14** is a graph showing the training data and test data till June 15 separated with a vertical dashed line. The two PPA detected disturbance periods are highlighted in different shades. **Figure 15** is a chart showing the contribution of each variable for Disturbances 1 and 2, respectively. **Figure 16** is a graph showing the monitoring indexes $\phi_e^r$ and $\phi_e$ of Disturbances 1 and 2. **Figure 17** is a set of graphs showing the original and PPA-generated values for the anomaly periods in the training and test datasets.

The number of PPA DLVs $\ell$ was chosen with PPV to account for at least 95% of the total predictable variances with 15 latent variables. Figure 17 gives the PPV($\ell$) and PTV($\ell$) for PPA models of the preprocessed training data. It is seen that $\ell = 4$ is sufficient to account for 95% of PPV for the final PPA model. For comparison, the PPV($\ell$) and PTV($\ell$) for LaVAR-CCA and DiCCA are also shown in Figure 17. It is evident that PPA is capable of achieving the highest PTV for the same number of DLVs among the three models. This result is due to the maximized covariance objective in the PPA model, while in the other two models the canonical correlations are maximized.

After obtaining the final Principal Predictor Analysis (PPA) model and the corresponding monitoring control limits, the model is applied for fault detection and diagnosis on the test dataset from June 1 to June 15. The monitoring chart for the test set, shown in Figure 13, indicates that the monitoring index $\phi_e$ has two periods of very high values that exceed the control limit. To verify that these disturbances significantly impact product impurity, Figure 14 illustrates the impurity samples of the training and test sets. The two periods are labeled Disturbance 1 and Disturbance 2 for further diagnosis of their contributors.

For the detected disturbance periods, fault diagnosis was performed to identify the fault sources and implement fault reconstruction using equations (42) and (43). Figure 15 presents the RBC of each variable for Disturbances 1 and 2, respectively. The two disturbances exhibit very different signatures. While "Make Flow" and "Base Level" are the dominant variables responsible for Disturbance 2, Disturbance 1 appears to have uniform contributions from nearly all variables, with "Make Flow" and "Feed Flow from FC" being the lead contributors.

To determine the appropriate number of fault directions that can adequately reconstruct the fault monitoring index $\phi_e$ back to the normal region, the reconstructed $\phi_e^r$ and the original $\phi_e$ in logarithmic scale for the two disturbances are shown in Figure 16. The PPA-based reconstruction method effectively restores substantially all $\phi_e^r$ values to be within the normal control limit using $\ell_i = 6$ and $\ell_2 = 7$ for Disturbances 1 and 2, respectively. The number of DLVs was used to calculate the RBCs shown in Figure 15.

With the reconstruction in equation (41), it is possible to generate what the normal operation data would look like if there were no disturbances. Denoting a period of anomalous data $\left\{ \mathbf{y}_{k+j} \right\}_{j=1}^{m}$ with $\mathbf{Y}_m = [\mathbf{y}_{k+1} \cdots \mathbf{y}_{k+m}]$, the reconstructed data is given by equation (45), where $\Xi_i \in \mathfrak{R}^{p \times \ell_i}$.

$$\mathbf{Y}_m^r = \mathbf{Y}_m - \Xi_i \mathbf{F}_m^r \qquad (45)$$

The reconstructed data for the observed disturbance period in the training set and the two disturbances in the test dataset are generated and compared with their actual values, as shown in Figure 17. The original values for these three disturbances show a notable discrepancy from their normal state, but the reconstructed values appear more similar to the normal data, demonstrating the effectiveness of the proposed reconstruction method for data curation.

The method for generating a principal predictor model described herein, or the PPA method, provides advancements in the field of high-dimensional data modeling by addressing the limitations of traditional univariate latent autoregressive models. By employing a vector autoregressive model for all latent variables, and maximizing the covariance between the latent vector and its prediction, the PPA method allows for the simultaneous extraction of dynamic latent variables with a descending order of predictability and ensures that the most predictable variances are captured. The iterative estimation process used in the PPA method allows for the continuous refinement and optimization of the model parameters, creating more accurate and reliable predictions from the generated model over time. This improvement in optimization and accuracy enhances computational processing, making the method faster and more efficient in handling high-dimensional time series data. Consequently, the PPA method is highly effective and efficient for dynamic process monitoring, fault detection, and various industrial applications. Additionally, the PPA method only needs a finite set of past data to generate the model. This means the PPA method can make predictions without requiring access to all past data of the system, thereby reducing the memory required for analysis.

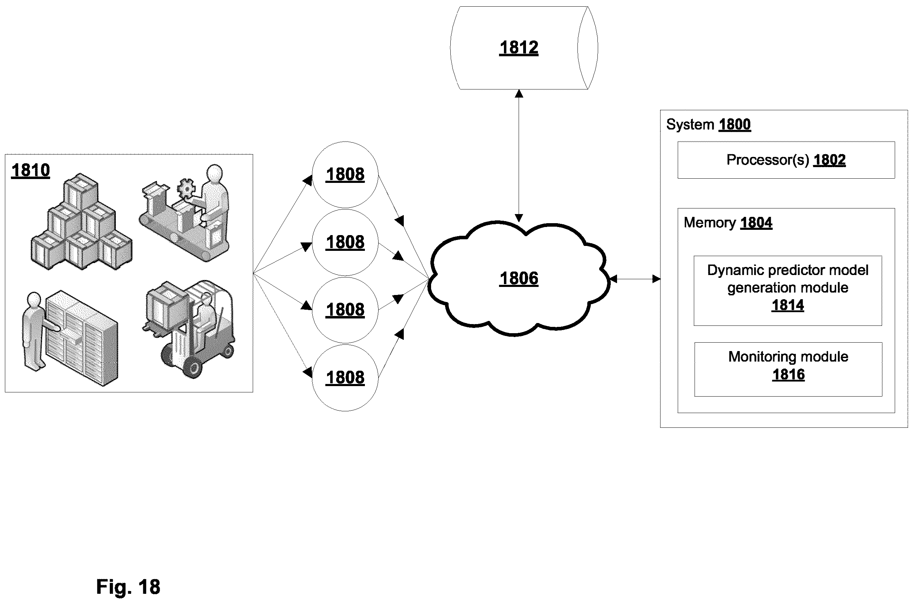

**Figure 18** is a block diagram of a system 1800 configured to generate one or more principal predictor models, according to some embodiments. In some embodiments, the system 1800, may also be configured to perform process monitoring and/or fault detection using the generated principal predictor model. In some embodiments, the system 1800, may be configured to perform any of the methods described herein, including methods 100, 200, 250, and 300. The system 1800 comprises one or more processor(s) 1802 and memory 1804. The processor(s) 1802 may include integrated electronic circuits that perform calculations, and may include a microprocessor, for example. The processor(s) 1802 may comprise one or more microprocessors, graphic processing units (GPUs), central processing units (CPUs), application specific instruction set processors (ASIPs), application specific integrated circuits (ASICs) or other processors capable of reading and executing instruction code.

In some embodiments, the processor 1802 may be in the form of a controller, where the controller functions as the central processing unit (CPU) of a system. The term "controller" means any device, system, or part thereof that controls at least one operation. A controller may be implemented in hardware, firmware, software, or some combination of at least two of the same. The functionality associated with any particular controller may be centralized or distributed, whether locally or remotely. The controller may execute instructions from software programs, process data, and manage the flow of information within the system. The controller may include an arithmetic logic unit (ALU) for performing calculations, control units for directing operations, and memory units for storing data and instructions. The controller may be configured to perform complex computations, manage peripheral devices, and ensure the efficient execution of tasks. In some embodiments, the controller may be configured to interact with one or more modules in memory 1804, to retrieve, decode, interact with and/or execute instructions, and/or store results and outputs.

As used here, the phrase "configured to" may be interchangeably used with the phrases "suitable for," "having the capacity to," "designed to," "adapted to," "made to," or "capable of" depending on the circumstances. The phrase "configured to" does not essentially mean "specifically designed in hardware to." Rather, the phrase "configured to" may mean that a device can perform an operation together with another device or parts. For example, the phrase "processor configured to perform A, B, and C" may mean a generic-purpose processor (such as a CPU or application processor) that may perform the operations by executing one or more software programs stored in a memory device or a dedicated processor (such as an embedded processor) for performing the operations.

Memory 1804 may comprise one or more volatile or non-volatile memory types. For example, memory 1804 may comprise one or more of random access memory (RAM), read-only memory (ROM), electrically erasable programmable read-only memory (EEPROM) or flash memory. Memory 1804 comprises program code (for example, configured to store executable code modules or engines), accessible by the processor(s). When executed by the processor(s) 1802, the program code provides the various computational capabilities and functionality of the system 1800, causing the system to perform certain functionalities, which are described herein. In some embodiments, memory 1804 stores instructions (such as program code) which, when executed by the processor(s), 1802 causes the system 1800 to perform methods for generating one or more principal predictor models from multi-dimensional time series data and/or to function according to any of the methods described herein, including any one of methods 100, 200, 250, and 300.

In some embodiments, the system 1800 may be implemented as a distributed system comprising multiple server systems configured to communicate over a network to provide the functionality of the system 1800. For example, one or more of the program code(s) (for example modules or engines) may be deployed on one or more disparate or remote servers, which may cooperate to provide the functionality of the system 1800 described. In some embodiments, the system 1800 may be in communication with a network 1806, may be configured to facilitate communication with additional components, including sensor(s) 1808, and one or more data stores 1812. In some embodiments, the system may include a network interface (not shown) which may comprise a combination of network interface hardware and network interface software suitable for establishing, maintaining and facilitating communication over a relevant communication channel.

The system 1800 may be in communication with a plurality of sensors 1808. The sensors 1808 may be configured to receive data from a dynamic system 1810. The received data may be multi-dimensional time series data. In some embodiments, the sensors 1808 are configured to transmit the received data through the network 1806 to the system 1800. In some embodiments, the system may be configured to receive data directly from the sensors, through a wired or wireless connection and, in some embodiments, the sensor 1808 may be part of system 1800. The one or more data stores 1812 may form part of or be local to the system 1800, or may be remote from and accessible to the system 1800, for example, through the network 1806. The one or more data stores 1812 may be relational or non-relational databases. In some embodiments, the data store 1812 may be a database, configured to store multi-dimensional time series data. In some embodiments, the data received by the sensors 1808 may be stored in data store 1812 and retrieved by the system 1800.

The system 1800 may include a principal predictor model generation module 1814, configured to generate one or more principal predictor models from multi-dimensional time series data. The principal predictor model generation module 1814 may be executed by processor 1802. The principal predictor model generation module 1814 may be configured to execute method 100 as disclosed herein. The generation module 1814 may be configured to receive multi-dimensional time series data from the plurality of sensors 1808, transform the multi-dimensional time series data into reduced-dimensional time series data. and extract a plurality of latent variables from the time series data. Processor 1802 executing generation module 1814 may determine the values of the plurality of latent variables in a first time period, initialize a loadings matrix corresponding to a subset of latent variables of the plurality of extracted latent variables, and determine one or more principal predictor model parameters by performing an iterative process. In some embodiments, processor 1802 executing generation module 1814, may predict values of the plurality of latent variables based on the time series data and the loadings matrix, calculate a new loadings matrix from the loadings matrix and the predicted values of the latent variables, update the loadings matrix based on the calculated new loadings matrix, and iteratively repeating those steps until the one or more principal predictor model parameters reach convergence. The generation module 1814 may be configured to output the principal predictor model, for example, to data store 1812.

In some embodiments, the system 1800 may include a monitoring module 1816, configured to generate one or more monitoring indices using the generated dynamic predictor module. In some embodiments, the monitoring module 1816 may form part of, or be contained within, the generation module 1814. In some embodiments, the monitoring module 1816 may be configured to perform process monitoring and/or fault detection of the system 1810. The monitoring module 1816 may be configured to perform, via processor 1802, any of the methods described herein, including any one of methods 200, 250 and 300. The monitoring module 1816 may be configured to analyze, via processor 1802, the time series data received from the plurality of sensors 1808 corresponding to the dynamic system 1810 using the generated principal predictor model output from generation module 1814. In some embodiments, the monitoring module 1816 is configured to generate one or more monitoring indices for prediction residuals and/or latent variables of the analyzed time series data, and detect an abnormality in the time series data based on the monitoring index. The monitoring module 1816 may be further configured to generate one or more monitoring indices by generating one or more first monitoring indices for the prediction residuals, generating one or more second monitoring indices for the latent variables, and generating one or more combined monitoring indices based on the one or more first monitoring indices and the one or more second monitoring indices. The system may perform any of the methods described above with reference to Figures 1-17.

In some embodiments, there is provided a machine-readable medium storing instructions which, when executed by one or more processors of a system, cause the system to receive, from a plurality of sensors, multi-dimensional time series data corresponding to a plurality of original variables, extract, by a controller, a plurality of latent variables from the time series data and determine values of the plurality of latent variables in a first time period, initialize, by the controller, a loadings matrix corresponding to a set of latent variables of the plurality of latent variables, determine, by the controller, one or more principal predictor model parameters, by performing an iterative process which comprises: (a) predicting values of the plurality of latent variables based on the time series data and the loadings matrix by using an estimation process which maximizes a covariance between the values of the plurality of latent variables and the predicted values of the plurality of latent variables, (b) calculating a new loadings matrix from the loadings matrix and the predicted values of the latent variables, (c) updating the loadings matrix based on the calculated new loadings matrix, and (d) iteratively repeating (a) to (c) until the one or more principal predictor model parameters reach convergence. The machine-readable medium storing instructions may be non-transitory. The instructions may include instructions for causing the one or more processors to perform any of the methods described above with reference to Figures 1-71.

In some embodiments, there is provided a machine-readable medium storing instructions which, when executed by one or more processors of a system, cause the system to perform any of the methods disclosed herein, including any of methods 100, 200, 250 and 300.

Except where logic dictates otherwise, features of any of the embodiments or appended claims may be combined with features of any of the other embodiments and/or appended claims.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

**Claims**

1. A method for generating a principal predictor model from multi-dimensional time series data, comprising:

   receiving, from a plurality of sensors, multi-dimensional time series data corresponding to a plurality of original variables;
   transforming the multi-dimensional time series data to a lower dimension to define reduced-dimensional time series data;
   extracting, by a controller, a plurality of latent variables from the reduced-dimensional time series data and determining values of the plurality of latent variables in a first time period;
   initializing, by the controller, a loadings matrix corresponding to a set of latent variables of the plurality of latent variables;
   determining, by the controller, one or more principal predictor model parameters, by performing an iterative process which comprises:

   (a) predicting values of the plurality of latent variables based on the reduced-dimensional time series data and the loadings matrix, by using an estimation process which maximizes a covariance between the values of the plurality of latent variables and the predicted values of the plurality of latent variables;

(b) calculating a new loadings matrix from the loadings matrix and the predicted values of the latent variables;

(c) updating the loadings matrix based on the calculated new loadings matrix; and

(d) iteratively repeating (a) to (c) until the one or more principal predictor model parameters reach convergence.

2. The method according to claim 1, wherein transforming the multi-dimensional time series data to a lower dimension comprises performing singular value decomposition (SVD) on the multi-dimensional time series data.

3. The method according to any one of claims 1 to 2, further comprising generating a latent vector autoregressive (LaVAR) model based on the determined one or more principal predictor model parameters.

4. The method according to any one of claims 1 to 3, wherein the principal predictor model comprises a maximum predicted variance (MPV) objective.

5. The method according to any one of claims 1 to 4, wherein the estimation process simultaneously maximizes a covariance of the predicted values of the plurality of latent variables; or a covariance of predicted variability in the predicted values of the plurality of latent variables.

6. The method according to any one of claims 1 to 5, wherein calculating a new loadings matrix comprises performing an eigen-decomposition on a matrix of the predicted values of the plurality of latent variables to calculate the new loadings matrix.

7. The method according to any one of claims 1 to 6, further comprising determining the number of latent variables in the set of latent variables.

8. The method according to claim 7, wherein determining the number of latent variables captures a target amount of predictable variations in the reduced-dimensional time series data by the latent variables.

9. The method according to any one of claims 7 to 8, wherein determining the number of latent variables is based on a target proportion of predicted variance (PPV).

10. The method according to any one of claims 1 to 9, further comprising determining an orthogonal complement of the loadings matrix to define a static loadings matrix.

11. A method for generating a principal predictor model from multi-dimensional time series data according to any one of claims 1 to 10, further comprising:

analyzing the multi-dimensional time series data corresponding to a dynamic system using the principal predictor model;

generating one or more monitoring indices for prediction residuals and/or latent variables of the analyzed multi-dimensional time series data; and

detecting an abnormality in the multi-dimensional time series data based on the one or more monitoring indices.

12. The method according to claim 11, wherein generating one or more monitoring indices, comprises:

a) generating one or more first monitoring indices for the prediction residuals;

b) generating one or more second monitoring indices for the latent variables; and

c) generating one or more combined monitoring indices based on the one or more first monitoring indices for the prediction residuals and the one or more second monitoring indices for the latent variables.

13. The method according to claim 12, wherein the one or more first monitoring indices for the prediction residuals comprises a first Hotelling's index defined for the prediction residuals, a square prediction error (SPE) index, or a combination of the first Hotelling's index and the SPE index.

14. The method according to any one of claims 12 to 13, wherein the one or more second monitoring indices for the latent variables comprises a second Hotelling's index defined for the predicted latent variables.

15. The method according to any one of claims 12 to 14, wherein the method further comprises generating one or more overall monitoring indices for both the prediction residuals and the predicted latent variables by:

> determining a first Hotelling's index for the prediction residuals;
> determining a squared prediction error (SPE) index for the prediction residuals;
> combining the first Hotelling's index for the prediction residuals and the SPE index for the prediction residuals to generate one or more combined monitoring indices for the prediction residuals;
> determining a second Hotelling's index for the predicted latent variables; and
> combining the second Hotelling's index for the predicted latent variables with the one or more combined monitoring indices for the prediction residuals.

16. A method for identifying a detected abnormality in multi-dimensional time series data using a principal predictor model generated by the method of any one of claims 1 to 15, comprising:

> determining a prediction error matrix based on differences between the predicted values of the multi-dimensional time series data and the actual values of the multi-dimensional time series data;
> decomposing the prediction error matrix to identify abnormality directions in the prediction error matrix;
> determining a reconstruction-based contributions (RBC) matrix comprising the contributions of each variable to the detected abnormality; and
> analyzing the RBC matrix to identify the detected abnormality.

17. The method according to claim 16, wherein the abnormality directions are used to reconstruct abnormality-free data.

18. The method according to claim 17, wherein reconstructing the abnormality-free data comprises projecting the predicted error matrix onto the abnormality directions and subtracting the contributions of the detected abnormality from the multi-dimensional time series data.

19. A system for generating principal predictor models from multi-dimensional time series data, comprising:

> a plurality of sensors, configured to detect multi-dimensional time series data corresponding to a plurality of original variables; and
> a processing unit coupled to the plurality of sensors, the processing unit configured to:

>> transform the multi-dimensional time series data to a lower dimension to define reduced-dimensional time series data;
>> extract, by a controller, a plurality of latent variables from the reduced-dimensional time series data and determine values of the plurality of latent variables in a first time period;
>> initialize, by the controller, a loadings matrix corresponding to a set of latent variables of the plurality of latent variables;
>> determine, by the controller, one or more principal predictor model parameters, by performing an iterative process which comprises:

>>> (a) predicting values of the plurality of latent variables based on the reduced-dimensional time series data and the loadings matrix, by using an estimation process which maximizes a covariance between the values of the plurality of latent variables and the predicted values of the plurality of latent variables;
>>> (b) calculating a new loadings matrix from the loadings matrix and the predicted values of the latent variables, and
>>> (c) updating the loadings matrix based on the calculated new loadings matrix; and
>>> (d) iteratively repeating (a) to (c) until the one or more principal predictor model parameters reach convergence.

20. A non-transitory computer-readable medium storing instructions which, when executed by one or more processors, cause the one or more processors to:

> receive, from a plurality of sensors, multi-dimensional time series data corresponding to a plurality of original variables;
> transform the multi-dimensional time series data to a lower dimension to define reduced-dimensional time series data;
> extract a plurality of latent variables from the reduced-dimensional time series data and determine values of the plurality of latent variables in a first time period;

initialize a loadings matrix corresponding to a set of latent variables of the plurality of latent variables;

determine one or more principal predictor model parameters by performing an iterative process which comprises:

(a) predicting values of the plurality of latent variables based on the reduced-dimensional time series data and the loadings matrix, by using an estimation process which maximizes a covariance between the values of the plurality of latent variables and the predicted values of the plurality of latent variables;

(b) calculating a new loadings matrix from the loadings matrix and the predicted values of the latent variables, and

(c) updating the loadings matrix based on the calculated new loadings matrix; and

(d) iteratively repeating (a) to (c) until the one or more principal predictor model parameters reach convergence.

100

Receive multi-dimensional time series data from a plurality of sensors
**110**

Transform the multi-dimensional time series data to reduced-dimensional
time series data
**115**

Process the data to extract a plurality of latent variables and determine
their values for an initial time period
**120**

Initialize a loadings matrix that corresponds to a subset of the extracted
latent variables
**130**

Determine one or more dynamic predictor model paramaters
**140**

Predict values of the latent variables based on the reduced-
dimensional time series data and the loadings matrix
**150**

Calculate a new loadings matrix by incorporating the
predicted values of the latent variables
**160**

Update the loadings matrix to be the new loadings matrix
**170**

Have parameters converged?
**180**

NO

YES

Output the dynamic predictor model parameters
**190**

**Fig. 1**

200

Analyze the time series data corresponding to a dynamic system using
the dynamic predictor model
**210**

Generate one or more monitoring indices for prediction residuals and/or
predicted latent variables of the analyzed time series data
**220**

Detect an abnormality in the time series data based on the one or more
monitoring indices
**230**

**Fig. 2A**

250

Generate one or more first monitoring indices for the prediction residuals
**260**

Generate one or more second monitoring indices for the latent variables
**270**

Generate one or more combined monitoring indices based on the one or more first monitoring indices and the one or more second monitoring indices
**280**

**Fig. 2B**

300

Determine a squared prediction error (SPE) index for the prediction residuals
**310**

Combine a first Hotelling's index for the prediction residuals and the SPE index to generate one or more combined monitoring indices for the prediction residuals
**320**

Determine a second Hotelling's index for the predicted latent variables
**330**

Combine the second Hotelling's index with the one or more combined monitoring indices for the prediction residuals
**340**

Output one or more overall monitoring indices
**350**

**Fig. 3A**

**Fig. 3B**

$$y_{2k}$$

$$\frac{1}{1-q^{-1}}$$

$$0$$

$$1$$

$$\frac{Kq^{-1}}{1-q^{-1}}$$

$$-$$

$$y_{1k}$$

Fig. 4

Fig. 5A

Fig. 5B

| XMEAS | Description | Loop |
|---|---|---|
| (1) | A Feed (kscmh) | 1 |
| (2) | D Feed (kg/h) | 2 |
| (3) | E feed (kg/h) | 3 |
| (4) | A and C Feed (kscmh) | 4 |
| (5) | Recycle Flow (kscmh) | |
| (6) | Reactor Feed Rate (kscmh) | 14, 15 |
| (7) | Reactor Pressure (kPa gauge) | 12, 18 |
| (8) | Reactor Level (%) | 11, 19 |
| (9) | Reactor Temperature (°C) | 16 |
| (10) | Purge Rate (kscmh) | 5 |
| (11) | Product Sep Temp (°C) | 17 |
| (12) | Product Sep Level | 10 |
| (13) | Product Sep Pressure (kPa gauge) | |
| (14) | Product Sep Underflow ($m^3$/h) | 6 |
| (15) | Stripper Level (%) | 9 |
| (16) | Stripper Pressure (kPa gauge) | |
| (17) | Stripper Underflow ($m^3$/h) | 7 |
| (18) | Stripper Temp (°C) | |
| (19) | Stripper Steam Flow (kg/h) | |
| (20) | Compressor Work (kW) | |
| (21) | Reactor Coolant Temp (°C) | |
| (22) | Separator Coolant Temp (°C) | |
| (40) | Component G in Product (mol %)) | 13 |

**Fig. 6**

**Fig. 7**

| Method | Index | IDV | FDR (%) | FAR (%) |
|---|---|---|---|---|
| LaVAR-MPV | $\phi_e$ | 2 | 98.29 | 5.85 |
| | | 11 | 88.01 | 3.51 |
| | | 13 | 92.93 | 5.02 |
| | $\phi_o$ | 2 | 99.00 | 4.35 |
| | | 11 | 94.93 | 2.34 |
| | | 13 | 96.50 | 3.68 |
| DiCCA | $\phi_e$ | 2 | 94.65 | 6.52 |
| | | 11 | 86.44 | 3.51 |
| | | 13 | 91.65 | 4.85 |
| | $\phi_o$ | 2 | 98.86 | 4.35 |
| | | 11 | 92.15 | 3.18 |
| | | 13 | 96.36 | 3.68 |
| PCA | $Q_y$ | 2 | 98.43 | 3.85 |
| | | 11 | 90.29 | 6.52 |
| | | 13 | 91.58 | 4.18 |
| | $\phi_y$ | 2 | 98.79 | 2.84 |
| | | 11 | 91.65 | 2.84 |
| | | 13 | 96.43 | 3.01 |

**Fig. 8A**

| Method | Monitoring index | IDVs | FDR (%) | FAR (%) |
|---|---|---|---|---|
| LaVARMPV | $\phi_e$ | IDV(2) | 89.87 | 5.85 |
| | | IDV(11) | 85.90 | 3.51 |
| | | IDV(13) | 70.48 | 5.02 |
| | $\phi_o$ | IDV(2) | 93.83 | 4.35 |
| | | IDV(11) | 93.83 | 2.34 |
| | | IDV(13) | 80.18 | 3.68 |
| DiCCA | $\phi_{eDiCCA}$ | IDV(2) | 88.11 | 6.52 |
| | | IDV(11) | 85.46 | 3.51 |
| | | IDV(13) | 69.60 | 4.85 |
| | $\phi_{oDiCCA}$ | IDV(2) | 92.95 | 4.35 |
| | | IDV(11) | 92.95 | 3.18 |
| | | IDV(13) | 77.53 | 3.68 |
| PCA | $Q_{yPCA}$ | IDV(2) | 90.31 | 3.85 |
| | | IDV(11) | 88.99 | 6.52 |
| | | IDV(13) | 63.00 | 4.18 |
| | $\phi_{yPCA}$ | IDV(2) | 92.51 | 2.84 |
| | | IDV(11) | 91.19 | 2.84 |
| | | IDV(13) | 80.18 | 3.01 |

**Fig. 8B**

**Fig. 9A**

EP 4 718 290 A2

Fig. 9B

Fig. 10

Fig. 11

Fig. 12

Fig. 13

**Fig.14**

**Fig. 15**

Fig. 16

**Fig. 17**

**Fig. 18**

**REFERENCES CITED IN THE DESCRIPTION**

**Patent documents cited in the description**

- US 63698575
- US 20197125